# EUROPEAN PATENT SPECIFICATION

(11) **EP 1 491 726 B1**
(45) Date of publication and mention of the grant of the patent: **11.02.2009**
(21) Application number: 04014585.6
(22) Date of filing: 22.06.2004
(51) Int. Cl.: F01K 23/06, F02G 5/00

(54) **Waste heat recovery system of heat source, with rankine cycle**
Abfallwärmerekuperationssystem einer Wärmequelle mit Rankine-Zyklus
Système de récupération de chaleur perdue d'une source de chaleur, avec cycle de Rankine

(30) Priority: 23.06.2003 JP 2003178599; 02.12.2003 JP 2003403492
(43) Date of publication of application: 29.12.2004
(73) Proprietor: Denso Corporation, Kariya-city, Aichi-pref. 448-8661 (JP)
(72) Inventor: Hamada, Shinichi, Kariya-city, Aichi-pref., 448-8661 (JP); Sasaki, Minoru, Kariya-city, Aichi-pref., 448-8661 (JP); Inaba, Atsushi, Kariya-city, Aichi-pref., 448-8661 (JP)
(74) Representative: Klingseisen, Franz

(56) References cited:
- WO-A-01/65101
- US-A- 3 888 084
- US-A- 4 996 845
- US-A- 5 327 987

## Description

The present invention is related to a waste heat recovery system used for a heat generating element (heat source), such as a motor and a heat engine. More particularly, the present invention is suitable for a power recovery using waste heat of an internal combustion engine of a vehicle for example.

According to JP-B2-2540738, a Rankine cycle is constructed using components of a refrigerant cycle in a vehicle internal combustion engine or the like. The Rankine cycle is constructed as a generally known waste heat recovery system of a heat generating element such as an internal combustion engine. Waste heat of the heat generating element is recovered, so that the recovered power assists a shaft output of the engine.

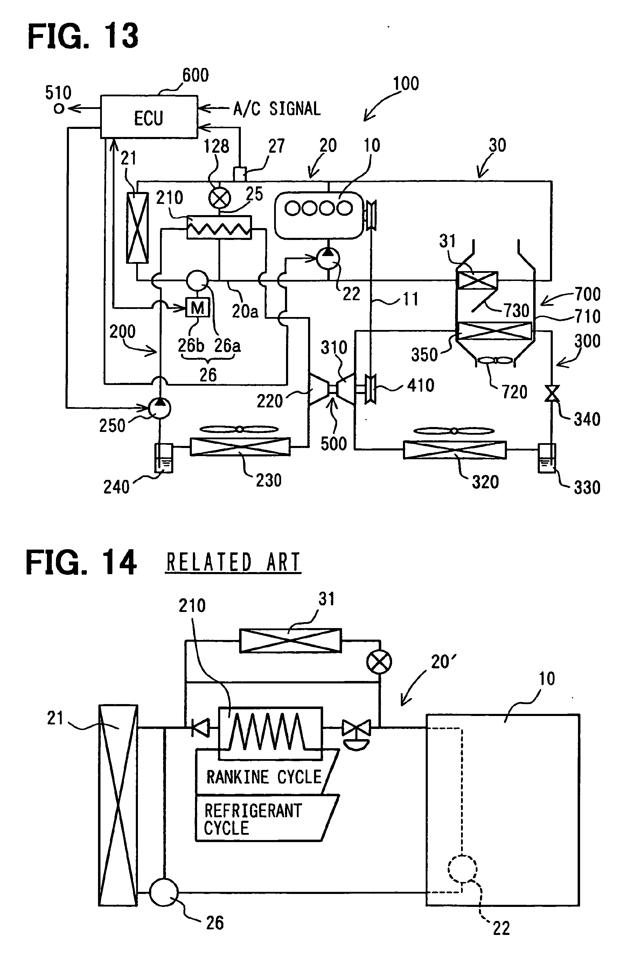

FIG. 14 shows a cooling water circuit 20' according to a related art. Cooling water is circulated between an engine 10 and a radiator 21 in the cooling water circuit 20'. A high-temperature evaporator 210 is connected with the cooling water circuit 20', so as to form a Rankine cycle for recovering waste heat generated in the engine 10.

The cooling water circuit 20' includes a switching valve 26 using a thermostat, in general. In this structure, when temperature of cooling water is low, such as in a case where the engine 10 is started, cooling water bypasses the radiator 21 so as not to be introduced into the radiator 21.

In general, a mechanical-type hot water pump 22 is used for circulating cooling water in the cooling water circuit 20'. However, in the related art, an appropriate location of the high-temperature evaporator 210 is not considered in the cooling water circuit 20'. Because the high-temperature evaporator 210 is serially connected with the radiator 21, a flow resistance of water may become large. When the flow resistance becomes large, flow amount of the cooling water decreases. As a result, a cooling performance in the radiator 21 decreases.

The capacity of the hot water pump 22 is in proportion with respect to the rotation speed (revolution) of the engine 10. Accordingly, a flow amount of water circulated by the hot water pump 22 is limited in a low revolution range of the engine 10. Besides, a response of temperature sensitivity of the thermostat used in the switching valve 26 is slow. Therefore, fluctuation of cooling water temperature or fluctuation of cooling water flow amount becomes large depending on a vehicle running condition in a cooling water circuit, which uses the mechanical hot water pump 22 or the switching valve 26 employing the thermostat. Accordingly, a heat amount supplied to the high-temperature evaporator 210 (i.e., Rankine cycle) may become unstable. In addition, when a heat consumption in the Rankine cycle becomes excessively large, the flow amount of cooling water flowing through the cooling water circuit 20' excessively decreases, and an engine operation (e.g., fuel vaporization in the engine 10) is not effectively performed. Accordingly, the output power of the engine 10 may be reduced, and fuel efficiency may become low.

Further, a compressor is used in the refrigerant cycle, and is also used as an expansion device in the Rankine cycle. Therefore, when the refrigerant cycle is operated in summer or the like, the compressor cannot be used as the expansion device in the Rankine cycle. In this case, a power recovery operation cannot be performed in the Rankine cycle. Accordingly, waste heat of the engine 10 cannot be recovered for assisting the shaft output of the engine 10 or the like.

US-A-5,327,987 discloses a hybrid car having both internal combustion engine and electric battery powered motor drive, and having an electric motor generating system utilizing waste heat energy from the internal combustion engine, and waste kinetic energy from shock absorbers.

The system comprises a cooling heat exchanger for cooling a thermal medium circulated between the cooling heat exchanger and the internal combustion engine. A heater performs heat exchange between the thermal medium and an operation fluid heated by the engine and expanded by an expansion device.

US-A-3,888,084 specifies a further thermal recovery system used in conjunction with an internal combustion engine and an exhaust system.

A further thermal energy recovery system is specified in WO 01/65101 A.

In view of the foregoing problems, it is an object of the present invention to effectively use waste heat of the thermal medium heated by a heat source (heat generating element, e.g., engine) without reducing a cooling performance of the heat source, which is cooled by circulation of the thermal medium. It is another object of the present invention to produce a waste heat recovery system of the heat source, in which a heat amount can be stably secured on the side of the Rankine cycle without reducing the cooling performance of the heat source.

This object is attained by a system having the features cited in claim 1.

According to the present invention, a waste heat recovery system of a heat source (heat generating element) cooled by a circulation of a thermal medium, includes a cooling heat exchanger for cooling the thermal medium, and a Rankine cycle. The cooling heat exchanger is disposed in a thermal medium circulating circuit through which the thermal medium is circulated between the cooling heat exchanger and the heat source. Further, the Rankine cycle includes a heater that performs heat exchange between an operation fluid and the thermal medium heated by the heat source so as to heat the operation fluid, and an expansion device that expands the operation fluid heated by the heater to be evaporated so as to generate a driving power. In the waste heat recovery system, the heater is arranged in parallel with the cooling heat exchanger in such a manner that the thermal medium flowing through the heater bypasses the cooling heat exchanger.

Because the heater is arranged in parallel with the cooling heat exchanger with respect to the flow of thermal medium, a flow resistance of the thermal medium flowing through the cooling heat exchanger is not increased due to the arrangement of the heater of the Rankine cycle. Thus, waste heat energy of the thermal medium can be effectively used without affecting the cooling performance of the heat source such as the engine. For example, the thermal medium is cooling water. Further, a pumping unit is disposed in the thermal medium circulating circuit to circulate the thermal medium, and a heater circuit is provided, and the heater is arranged in the heater circuit. Further, the heater circuit includes a heating heat exchanger which performs heat exchange between blown air and thermal medium heated by the heat source so as to heat the blown air.

Preferably, a bypass circuit is branched from a section of the thermal medium circulating circuit where thermal medium is circulated between the heat source and the cooling heat exchanger to bypass the cooling heat exchanger, and merged with a downstream side of the cooling heat exchanger in the thermal medium circulating circuit. In this case, the heater is arranged in the bypass circuit.

Preferably, a switching unit is disposed in the thermal medium circulating circuit to adjust a flow distribution between a flow amount of thermal medium to be introduced into the heater and a flow amount of thermal medium passing through the cooling heat exchanger. Further, at least one of a discharge capacity of the pumping unit and the flow distribution distributed by the switching unit is variable.

Further, a control unit controls at least one of the pumping unit and the switching unit based on temperature of thermal medium discharged from the heat source in the thermal medium circulating circuit. In this case, the control unit calculates a difference (deviation) between a target thermal medium temperature and an actual temperature of the thermal medium discharged from the heat source.

For example, when the difference is less than a first threshold, the control unit determines that a temperature of the heat source is excessively low, and controls the switching unit so as to decrease a distribution amount of thermal medium flowing into the cooling heat exchanger when the distribution amount is not substantially zero. In contrast, when the difference is greater than a second threshold that is higher than the first threshold, the control unit determines that the temperature of the heat source is excessively high, and controls the pumping unit so as to increase the discharge capacity when the pumping unit has an extra discharge capacity.

Alternatively, when the difference is less than a first threshold, the control unit determines that a temperature of the heat source is excessively low, and controls the pumping unit so as to decrease the discharge capacity of the pumping unit. In contrast, when the difference is greater than a second threshold that is larger than the first threshold, the control unit determines that the temperature of the heat source is excessively high, and controls the pumping unit so as to increase the discharge capacity.

Further, when the difference is less than a first threshold, the control unit determines that a temperature of the heat source is excessively low, and controls the switching unit so as to decrease a distribution amount of thermal medium distributed by the switching unit to the cooling heat exchanger. In contrast, when the difference is greater than a second threshold, that is higher than the first threshold, the control unit determines the temperature of the heat source is excessively high, and controls the switching unit so as to increase the distribution amount.

The waste heat recovery system further includes a second switching unit for opening and closing a flow passage of thermal medium flowing into the heater, and the second switching unit is located on one of an inlet side of the heater and an outlet side of the heater. For example, the second switching unit is provided to change a flow amount of the thermal medium flowing into the heater. Alternatively, a forcibly closing control means forcibly controls the second switching unit when the temperature of the thermal medium is equal to or greater than a predetermined temperature.

In the present invention, the expansion device can be mechanically coupled with a compressor of a refrigerant cycle. In this case, the expansion device is disposed to add the driving power generated in the expansion device to the compressor, when the driving power is generated in the expansion device.

The above and other objects, features and advantages of the present invention will become more apparent from the following detailed description made with reference to the accompanying drawings. In the drawings:
FIG. 1, which does not form part of the invention, is a schematic diagram showing an entire structure of a waste heat recovery system for an engine, according to a first embodiment in the present invention;
FIG. 2A, which does not form part of the invention, is a schematic cross-sectional view of a switching unit shown in FIG. 1, showing a switching condition in which a cooling water flow amount distributed to a radiator is zero, and FIG. 2B, which does not form part of the invention, is a schematic cross-sectional view of the switching unit showing a switching condition in which the cooling water flow amount distributed to the radiator is maximum;
FIG. 3, which does not form part of the invention, is a schematic diagram showing a driving device connecting an expansion device in a Rankine cycle in FIG. 1 and a compressor in a refrigerant cycle in FIG. 1;
FIG. 4, which does not form part of the invention, is a flow diagram showing a control routine which controls an electrically driven pumping unit in FIG. 1 and an electrically driven switching unit in FIG. 1;
FIG. 5, which does not form part of the invention, is a schematic diagram showing an entire structure of a waste heat recovery system for an engine according to a second embodiment in the present invention;
FIG. 6, which does not form part of the invention, is a flow diagram showing a control routine which controls an electrically driven pumping unit in FIG. 5;
FIG. 7, which does not form part of the invention, is a schematic diagram showing an entire structure of a waste heat recovery system for an engine according to a third embodiment in the present invention;
FIG. 8, which does not form part of the invention, is a flow diagram showing a control routine which controls an electrically driven switching unit in FIG. 7;
FIG. 9 is a schematic diagram showing an entire structure of a waste heat recovery system for an engine according to a fourth embodiment in the present invention;
FIG. 10 is a flow diagram showing a control routine which controls an electrically driven second pumping unit in FIG. 9;
FIG. 11, which does not form part of the invention, is a schematic diagram showing an entire structure of a waste heat recovery system for an engine according to a fifth embodiment in the present invention;
FIG. 12, which does not form part of the invention, is a flow diagram showing a control routine which controls an electrically driven second switching unit in FIG. 11;
FIG. 13, which does not form part of the invention, is a schematic diagram showing an entire structure of a waste heat recovery system for an engine according to a sixth embodiment in the present invention; and
FIG. 14, which does not form part of the invention, is a schematic diagram showing an entire structure of a waste heat recovery system for an engine according to a related art.

Preferred embodiments which do not form part of the present invention will be now described. In the preferred embodiments, a waste heat recovery system of a heat generating element (heat source) in the present invention is typically used for an engine of a vehicle such as an automobile.

### (First Embodiment)

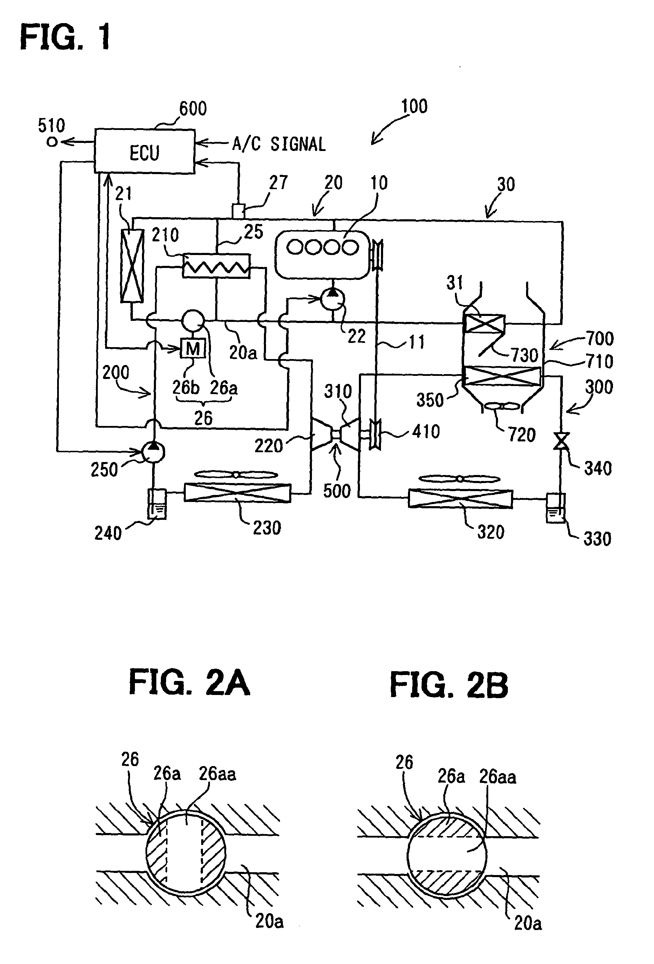

The first embodiment will be now described with reference to FIGS. 1 - 4. As shown in FIG. 1, a waste heat recovery system 100 for recovering waste heat of an internal combustion engine 10 is constructed with a Rankine cycle 200 and a refrigerant cycle 300.

The internal combustion engine 10 is a water-cooled engine cooled by circulation of cooling water. The engine 10 includes a circulation path (not shown) inside a cylinder block or the like. The circulation path is located around a combustion chamber (not shown) of the engine 10. Cooling water flows through the circulation path so as to perform a heat transmitting of heat energy from the engine 10 to the cooling water. The heat energy is a part of energy generated by combustion performed in the combustion chamber of the engine 10. The cooling water is heated in the engine 10, circulated in the circulation path of the engine 10, and then cooled in a cooling water circuit 20 including a radiator 21. Here, a heater circuit 30 can be provided for heating air using the heated engine-cooling water (hot water) as a heat source.

The Rankine cycle 200 is constructed with a heater 210, an expansion device 220, a condenser 230, a liquid receiver 240 and a pump 250. Operation fluid is included in the Rankine cycle 200, so that a closed circuit is formed. The operation fluid is circulated in the order of the heater 210 → the expansion device 220 → the condenser 230 → the liquid receiver 240 → the pump 250. The operation fluid is circulated in the Rankine cycle 200 by an operation of the electrically driven pump 250. The heater 210 is a heat exchanger for performing heat exchange between operation fluid supplied from the pump 250 and high-temperature cooling water passing through the cooling water circuit 20, so as to heat the operation fluid. In detail, the operation fluid supplied from the pump 250 is introduced into an operation fluid passage (not shown) of the heater 210. The high-temperature cooling water passing through the cooling water circuit 20 is introduced into a cooling water passage (not shown) of the heater 210. A partition wall (not shown) is provided between the cooling water passage and the operation fluid passage in the heater 210, for partitioning the cooling water passage and the operation fluid passage from each other. The expansion device 220 is a fluid device for generating a driving power such as a rotation power by expansion of super-heat vapor operation fluid heated in the heater 210. The condenser 230 is a heat exchanger for performing heat exchange between the operation fluid discharged from the expansion device 220 and exterior air, so as to condense operation fluid. The liquid receiver 240 is a receiver for separating operation fluid condensed in the condenser 230 into two phases (i.e., gas and liquid phases). Liquid fluid separated in the condenser 230 flows to the pump 250.

A radiator 21 is provided in the cooling water circuit 20. The radiator 21 performs heat exchange between cooling water circulated by the hot water pump 22 and exterior air so as to cool the cooling water. The hot water pump 22 is provided on the side of the engine 10. The hot water pump 22 can be either a mechanical pump or an electrically driven pump. A capacity of the mechanical pump is in proportion to a rotation speed (revolution) of the engine 10. The hot water pump 22 constructs a pumping unit which circulates cooling water in the cooling water circuit 20. As the hot water pump 22, the electrically driven pump is used in the following embodiment.

A bypass circuit 25, through which cooling water bypasses the radiator 21, is provided in the cooling water circuit 20. The bypass circuit 25 is branched from a water passage section between the engine 10 and the radiator 21, and is joined to a water passage section on the downstream of the radiator 21. The heater 210 is provided in the bypass circuit 25 to construct the Rankine cycle 200. The heater 210 performs heat exchange between cooling water flowing through the bypass circuit 25 and the operation fluid, so as to heat the operation fluid by the cooling water flowing through the bypass circuit 25 as a heat source.

Thus, a flow of cooling water passing through the radiator 21 and a flow of cooling water passing through the heater 210 become in parallel. The flow of cooling water passing through the heater 210 performs heat exchange with operation fluid flowing through the heater 210. Therefore, a flow resistance is not increased in the cooling water circuit 20 including the radiator 21, due to addition of the heater 210.

As a result, waste heat energy can be used without affecting a cooling performance of the engine 10, compared with a structure in which the heater 210 and the radiator 21 are serially arranged with respect to the cooling water flow.

The cooling water circuit 20 is not limited to the parallel structure constructed with the bypass circuit 25 shown in FIG. 1. The parallel structure can be constructed with a branch circuit that is formed in the cooling water circuit 20, such that a cooling water flow branches from the cooling water circuit 20, passes through the branch circuit, and merges with the cooling water circuit 20.

Alternatively, the parallel structure can be constructed with an externally connected circuit communicated with the cooling water circuit 20, for example. In this case, the cooling water flow branches from the cooling water circuit 20 and merges with the cooling water circuit 20 through the externally connected circuit. Other branch and merge structure, in which the heater 210 and the radiator 21 are arranged in parallel with respect to the cooling water flow, can be also used.

A switching valve 26 is preferably provided in a junction located between a cooling water circuit section 20a located on the downstream side of the radiator 21 and the bypass circuit 25. Alternatively, the switching valve 26 is also preferably provided in a section between the radiator 21 and the junction located between the cooling water circuit section 20a and the bypass circuit 25. Here, the section between the radiator 21 and the junction is located in the cooling water circuit section 20a. Thus, a flow amount of cooling water flowing through the cooling circuit 20 can be divided into a flow amount of cooling water flowing through the bypass circuit 25 and a flow amount of cooling water flowing through the radiator 21, in accordance with cooling water temperature. As a result, a waste heat recovery can be performed in the Rankine cycle 200 using the heater 210, while the engine 10 is maintained at a predetermined temperature. Cooling water (thermal medium) is circulated through the engine 10, so that the engine 10 is cooled. The body temperature of the engine 10 is represented by temperature of cooling water flowing out of the engine 10 (outlet water temperature).

The switching valve 26 is not limited to a switching valve using a thermostat, and can be an electrically driven switching valve. Here, the thermostat controls the flow amount of cooling water bypassing the radiator 21 in accordance with temperature of cooling water flowing around the thermostat. The thermostat controls the cooling water flow amount using a thermal characteristic of an inside wax which expands and contracts by heat.

The switching valve 26 can control a distribution between a flow amount of cooling water flowing through the bypass circuit 25 and a flow amount of cooling water flowing through the radiator 21. The flow amount of cooling water flowing through the bypass circuit 25 is a flow amount of cooling water which performs heat exchange in the heater 210. The flow amount of cooling water flowing into the radiator 21 is referred to as a radiator flow amount distribution, which is controlled by the switching valve 26. In contrast, the flow amount of cooling water flowing into the heater 210 for performing heat exchange is referred to as a heater flow amount distribution. As the switching valve 26, an electrically driven switching valve is used in the following embodiment.

The electrically driven switching valve 26 is constructed with a switching valve section 26a and an electrically control section 26b. The switching valve section 26a variably controls a flow amount of cooling water passing therethrough. The control section 26b is electrically connected with a control unit 600 to drive the valve section 26a.

As shown in FIGS. 2A and 2B, the valve section 26a is provided in the cooling water circuit section 20a, so as to open and close the flow passage of the cooling water circuit section 20a. The switching valve 26 is a rotary type switching valve. A cooling water passage 26aa is formed in the valve section 26a to penetrate the valve section 26a. The valve section 26a is rotatable. The cooling water passage 26aa is opened and closed by the control section 26b of the switching valve 26 in accordance with a rotation position of the valve section 26a. As shown in FIG. 2A, the cooling water passage 26aa is switched to be closed when the cooling water passage 26aa is rotated to be substantially perpendicular to the cooling water flow of the cooling water circuit section 20a. In this situation, the radiator flow amount distribution becomes zero. On the contrary, as shown in FIG. 2B, the cooling water passage 26aa is switched to be fully opened when the cooling water passage 26aa is rotated to be substantially in parallel with the cooling water flow of the cooling water circuit section 20a. In this situation, the radiator flow amount distribution becomes maximum.

Referring back to FIG. 1, a heater core 31 is provided in the heater circuit 30 in which cooling water (hot water) is circulated by the hot water pump 22. The heater core 31 is located in an air conditioning case 710 of an air conditioning unit 700, so as to perform heat exchange between air brown by a fan 720 and the hot water, so that the air brown by the fan 720 is heated. An air mixing door 730 is provided at the heater core 31. The air mixing door 730 is opened and closed, so as to variably control an amount of air blown through the heater core 31. The heater circuit 30 is connected with the cooling water circuit 20, so as to construct an externally connected circuit. The cooling water (hot water) flow is branched from the cooling water circuit 20 to the externally connected circuit, and is merged with the cooling water circuit 20 from the externally connected circuit (i.e., heater circuit 30).

A refrigerant cycle 300 is constructed with a compressor 310, a condenser 320, a liquid receiver 330, an expansion valve 340 and an evaporator 350. Refrigerant is filled in the refrigerant cycle 300 so as to form a closed circuit. Therefore, refrigerant flows in the refrigerant cycle 300 in this order, the compressor 310 → the condenser 320 → the liquid receiver 330 → the expansion valve 340 → the evaporator 350. The compressor 310 is a fluid device for compressing refrigerant flowing through the refrigerant cycle 300 to be high-temperature and high-pressure refrigerant. Here, the compressor 310 is a fixed displacement type compressor. A discharge amount of refrigerant is a predetermined amount by one rotation of the fixed displacement type compressor. The compressor 310 can be a variable displacement type compressor. In this case, a discharge amount of refrigerant discharged from the compressor 310 can be variably controlled by the control unit 600. When the variable displacement type compressor is used for the compressor 310, power needed for driving the compressor 310 can be decreased in an operation condition in which a load of the refrigerant cycle 300 becomes relatively small in autumn or in spring, for example. The condenser 320 is a heat exchanger connected with a discharge side of the compressor 310 for performing heat exchange with exterior air so as to cool and condense refrigerant. The liquid receiver 330 separates refrigerant condensed in the condenser 320 to be two-phase refrigerant (i.e., gas refrigerant and liquid refrigerant). Liquid refrigerant separated in the liquid receiver 330 is drawn out of the liquid receiver 330 from a section connected to the expansion valve 340. The expansion valve 340 decompresses and expands the liquid refrigerant introduced from the liquid receiver 330. A thermo-expansion valve is used as the expansion valve 340 in the first embodiment. Refrigerant is isenthalpically decompressed in the thermo-expansion valve 340. The thermo-expansion valve 340 controls its throttle opening, so that a super-heat degree of refrigerant drawn into the compressor 310 becomes a predetermined degree. The evaporator 350 is provided in the air conditioning case 710 of the air conditioning unit 700. Further, the heater core 31 is disposed in the air conditioning case 710 downstream of the evaporator 350 with respect to the air flow direction. The evaporator 350 is a heat exchanger for cooling air to be blown into the passenger compartment by the fan 720. The refrigerant, which is decompressed and expanded in the expansion valve 340, is evaporated in the evaporator 350 by absorbing heat from air, so that air blown by the fan 720 is cooled while passing through the evaporator 350. A refrigerant outlet side of the evaporator 350 is connected with a suction side of the compressor 310. A mixture rate between air cooled in the evaporator 350 and air heated by the heater core 31 is controlled in accordance with an opening degree of the air mixing door 730 so that conditioned air is obtained. Temperature of the conditioned air is controlled at a predetermined temperature set by a passenger riding on the vehicle.

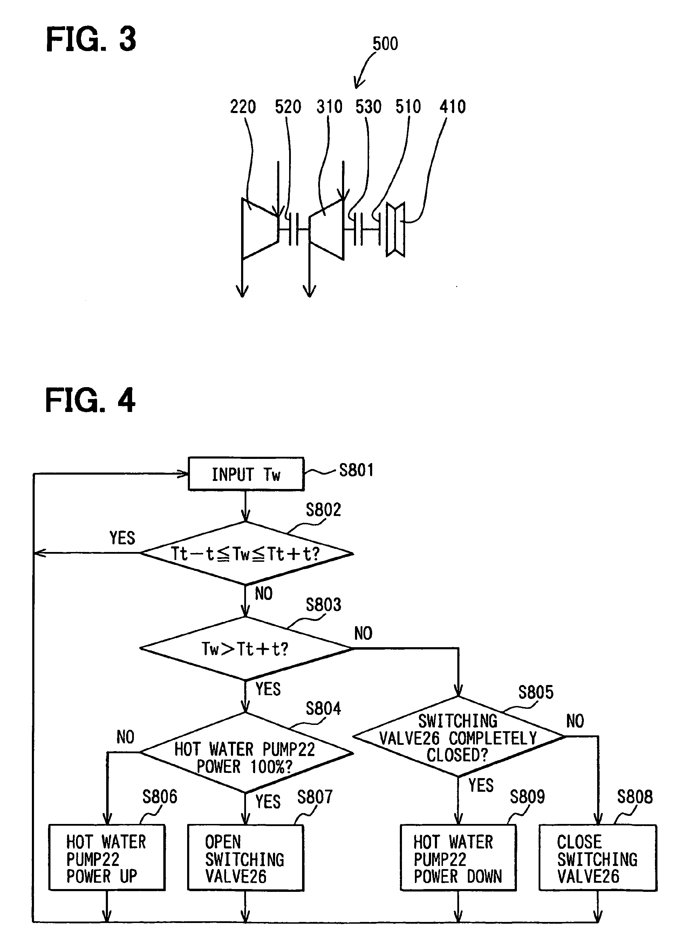

Next, a transmission device 500 is described in accordance with FIG. 3. The transmission device 500 connects the expansion device 220 constructing the Rankine cycle 200 and the compressor 310 constructing the refrigerant cycle 300. The transmission device 500 has a one-way clutch 520, a pulley 410, a one-way clutch 530 and a solenoid clutch 510. The one-way clutch 520 can connect or disconnect the expansion device 220 and the compressor 310. The pulley 410 transmits rotating power between the engine 10 and the transmission device 500. The one-way clutch 530 can connect the pulley 410 and the compressor 310. The transmission clutches 520, 530, 510, and the pulley 410 construct the transmission device 500 which can transmit driving power of the engine 10.

When the expansion device 220 is operated, engaging mechanisms (not shown) in the one-way clutch 520 are engaged each other so as to be connected with the compressor 310. On the contrary, when the expansion device 220 is not operated, the engaging mechanisms are disengaged, so that the expansion device 220 does not assist the rotation of the compressor 310 or the like. As a result, rotating power generated in the expansion device 220 is used for rotating power of the compressor 310, so that the expansion device 220 can assist refrigerant compression performed by the compressor 310. When driving power is not generated in the expansion device 220, that is, when the Rankine cycle 300 is not operated, the compressor 310 is not rotated by the expansion device 220. In this case, even when the refrigerant cycle 300 is operated, the expansion device 220 does not rotate the compressor 310, while the rotation of the compressor 310 for compressing refrigerant is permitted.

The pulley 410 is a rotating member receiving driving power of the engine 10 via a belt 11. When the operation of the refrigerant cycle 300 is stopped, the solenoid clutch 510 is disconnected. In this situation, rotation of the pulley 410 is permitted only in the direction in which rotation power of the engine 10 is transmitted. That is, the pulley 410 can be driven by the engine 10 while mechanically disconnected with the connected devices (i.e., the one-way clutch 530 and the compressor 310). Accordingly, transmission of rotating power from the pulley 410 to the connected devices is terminated. When the solenoid clutch 510 is connected, rotating power can be transmitted between the pulley 410 and the connected devices.

Engaging mechanisms (not shown) provided in the one-way clutch 530 are connected each other when rotating power of the pulley 410 can be transmitted, so that rotation of the pulley 410 and rotation of the compressor 310 can be assisted each other. Therefore, when rotating power generated by the expansion device 220 becomes equal to or greater than rotating power needed for rotating the compressor 310, surplus rotating power from the expansion device 220 is added to the engine 10 via the clutches 520, 530, 510 and the pulley 410. Thus, the expansion device 220 can assist rotation power of the engine 10.

The control unit 600 is connected with a cooling water temperature detecting unit 27, the hot water pump 22 and the electrically control section 26b of the switching valve 26. The cooling water temperature detecting unit 27 (water temperature sensor) detects temperature of cooling water flowing through the cooling water circuit 20. A cooling water detection signal, an A/C signal (air conditioning signal), a flow amount distributing signal and the like are input to the control unit 600. The cooling water detection signal indicates cooling water temperature detected by the water temperature sensor 27. The A/C signal is an operating request signal for requesting operation of the refrigerant cycle 300 and an operation of the heater circuit 30, in order to mix cooled air and heated air at a predetermined mixing rate. The flow amount distributing signal is an opening degree signal of the valve section 26a, and is used as a flow distributing signal of the switching valve 26. The control unit 600 controls the hot water pump 22 and the switching valve 26 in accordance with the cooling water detection signal and the flow amount distributing signal.

The control unit 600 estimates a discharge capacity of the hot water pump 22 based on a driving signal output to a motor section (not shown) of the hot water pump 22. When a structure of the motor is an electrically driven type, a voltage signal is used for a driving signal of the motor. When the structure of the motor is a brushless type, an electric current signal is used for a driving signal of the motor.

The control unit 600 controls the pump 250 and the solenoid clutch 510 or the like. A read only memory (ROM), a random access memory (RAM), a microprocessor (CPU), an input port 35 and an output port 36 of a microcomputer are connected via an interactive bus each other, so that the control unit 600 is constructed.

In the first embodiment, preferably, an outlet temperature of the engine 10 is detected by the water temperature sensor 27 so as to be used as cooling water temperature in the cooling water circuit 20. The location of the water temperature sensor 27 is not limited to the section between the radiator 21 and the engine 10. The location of the water temperature sensor 27 can be set at an outlet port section of a circulation passage inside the engine 10, or a section in the vicinity of the outlet port section of the circulation passage. The location of the water temperature sensor 27 can be at any section, as long as the temperature sensor 27 can detect temperature of cooling water flowing into the upstream side of the radiator 21. Thus, the control unit 600 can control the hot water pump 22 and the switching valve 26, based on temperature (outlet water temperature) of cooling water flowing out of the engine 10, not based on temperature of cooling water flowing through the radiator 21. As a result, the control unit 600 can control the hot water pump 22 and the switching valve 26, while prioritizing the cooling performance of the engine 10.

The control unit 600 can precisely increase and decrease a discharge capacity (i.e., discharge amount) of the hot water pump 22 by controlling at least the hot water pump 22, in accordance with an outlet water temperature Tw (i.e., driving condition) of the engine 10, regardless of rotation speed of the engine 10. Besides, the control unit 600 can precisely increase and decrease the radiator distribution flow amount by controlling at least the switching valve 26 in accordance with the outlet water temperature Tw of the engine 10.

Next, the control operation (first control operation) for controlling the flow amount of cooling water flowing through the cooling water circuit 20 is described in accordance with FIG. 4.

At step S801, the control unit 600 inputs a cooling water temperature detection signal transmitted from the water temperature sensor 27, so as to store the outlet water temperature Tw of the engine 10.

At step S802, it is determined whether the outlet water temperature Tw stored at step S801 is within a predetermined range [(Tt-t) - (Tt+t)] including a target cooling water temperature Tt. Here, a first threshold is shown by -t, and a second threshold is shown by +t. Accordingly, (Tt+t) shows the maximum value of the target cooling water temperature Tt, and (Tt-t) shows the minimum value of the target cooling water temperature Tt. That is, at step S802, it is determined whether a relationship of (Tt-t ≤ Tw ≤ Tt+t) is satisfied. The predetermined range [(Tt-t) - (Tt+t)] is a control range of the outlet water temperature Tw controlled by the control unit 600. The control range [(Tt-t) - (Tt+t)] is set in a range between 60°C and 110°C, for example.

A difference (Tw - Tt) between the outlet water temperature Tw and the target cooling water temperature Tt is calculated. When this difference (Tw - Tt) is in a predetermined range (-t - +t), that is, the difference (Tw - Tt) is equal to or greater than the first threshold -t, and is equal to or less than the second threshold +t (-t s Tw - Tt s t), the control returns to step S801. In this case, temperature of cooling water flowing through the cooling water circuit 20 is already controlled within the predetermined target cooling water temperature range [(Tt-t) - (Tt+t)]. Further, the hot water pump 22 and the switching valve 26 need not to be operated. Therefore, the heater distribution flow amount does not change. Heat can be stably secured to be supplied to the heater 210 (i.e., Rankine cycle 200), via cooing water flowing through the bypass circuit 25.

By contrast, when the relationship (Tt-t ≤ Tw ≤ Tt+t) is not satisfied, the control routine proceeds to step S803. That is, when the difference (Tw - Tt) is not within a predetermined range (i.e., -t - +t), namely, when the difference (Tw - Tt) is less than the first threshold -t, or is greater than the second threshold +t, the control routine proceeds to step S803.

At step S803, it is determined whether the difference (Tw - Tt) calculated at step S802 is greater than the second threshold +t. That is, it is determined whether the outlet water temperature Tw is greater than the maximum value (Tt+t) of the target cooling water temperature. Namely, it is determined whether a relationship (Tw > Tt+t) is satisfied or not. When the difference (Tw - Tt) is greater than the second threshold +t, the outlet water temperature Tw is greater than the maximum value (Tt+t) of the target cooling water temperature. Accordingly, the outlet water temperature Tw is determined to be excessively greater than the target cooling water temperature Tt, and the control routine proceeds to step S804. On the contrary, when the difference (Tw - Tt) is equal to or less than the second threshold +t, the outlet water temperature Tw is determined to be less than the minimum value (Tt-t) of the target cooling water temperature, based on the determinations performed at step S802 and step S803, and the control routine proceeds to step S805. In this case, a relationship (Tw < Tt-t) is satisfied. Accordingly, the outlet water temperature Tw is determined to be excessively smaller than the target cooling water temperature Tt.

At step S804, it is determined whether the hot water pump 22 has an extra discharge capacity, that is, it is predetermined whether the discharge capacity (power) of the hot water pump 22 is 100% or not, based on the driving signal transmitted from the control unit 600 to the hot water pump 22. When the hot water pump 22 has an extra discharge capacity, the control routine proceeds to step S806. Otherwise, when the hot water pump 22 does not have an extra discharge capacity, the control routine proceeds to step S807.

At step S806, the hot water pump 22 is controlled so as to increase the discharge amount of the hot water pump 22, because it is determined that the hot water pump 22 has an extra discharge capacity, at step S804. Subsequently, the control routine returns to step S801.

At step S807, the switching valve 26 is controlled to be opened so as to increase the radiator flow amount distribution, because it is determined that the hot water pump 22 does not have an extra discharge capacity, at step S804. Subsequently, the control routine returns to step S801.

At step S805, it is determined whether the switching valve 26 is completely closed (i.e., the radiator flow amount distribution is zero), based on the opening degree signal (flow distributing signal) transmitted from the switching valve 26. When the radiator flow amount distribution is not zero, that is, the switching valve 26 is not completely closed, it is determined that the outlet water temperature Tw can be increased by decreasing the flow amount of cooling water flowing through the radiator 21. Subsequently, the control routine proceeds to step S808. Otherwise, when the radiator flow amount distribution is zero, that is, the switching valve 26 is completely closed, it is determined that the outlet water temperature Tw cannot be increased by controlling the radiator flow amount distribution, and the control routine proceeds to step S809.

At step S808, the switching valve 26 is controlled to be closed so as to decrease the radiator flow amount distribution, because it is determined that the control (decreasing) of the radiator flow amount distribution is possible to increase the outlet water temperature Tw at step S805. Subsequently, the control routine returns to step S801.

At step S809, the hot water pump 22 is controlled, so as to decrease the discharge amount of the hot water pump 22, because it is determined that the control of the radiator flow amount distribution is not possible to increase the outlet water temperature Tw at step S805. Subsequently, the control routine returns to step S801.

According to the first embodiment described above, the heater 210 constructing the Rankine cycle 200 is arranged to be in parallel with the radiator 21 with respect to the flow of the cooling water. Therefore, the heater 210 does not affect the cooling performance of the engine 10. The heater 210 arranged in parallel with the radiator 21 with respect to the flow of the cooling water is not limited to be located in the bypass circuit 25. The heater 210 can be arranged in other parallel-structured circuits. For example, the heater 210 can be arranged in a branch circuit formed inside the cooling water circuit 20. In this case, the flow of the cooling water is branched from the cooling water circuit 20 and is merged with the cooling water circuit 20, after flowing through the branch circuit. The heater 210 can be also arranged in an externally connected circuit connected with the cooling water circuit 20 from an outside. In this case, the flow of the cooling water is branched from the cooling water circuit 20, and is merged with the cooling water circuit 20, after flowing through the externally connected circuit.

The first control operation performed by the control unit 600 has a control priority order as follows. The top priority is securing the outlet water temperature Tw of the engine. The second priority is securing the flow amount of cooling water flowing through the bypass circuit 25 for performing heat exchange with the operation fluid flowing through the heater 210. Thus, the cooling water circuit 20 can obtain an amount of heat consumed in the heater 210 (i.e., Rankine cycle 200) using cooling water flowing through the bypass circuit 25 as a heat source, without affecting the performance (operation) of the engine. Besides, the control unit 600 can control the outlet water temperature Tw, so as to control temperature of a main body of the engine 10 which is represented by the outlet water temperature Tw.

The first control operation can preferably control the hot water pump 22 and the switching valve 26 as described below, when a difference between the target cooling water temperature Tt and the actual outlet water temperature Tw is relatively large. Specifically, when the difference (Tw - Tt) is less than the first threshold -t, it is determined that the actual outlet water temperature Tw is excessively lower compared with the target cooling water temperature Tt (i.e., a negative determination is made at step S803 in FIG. 4). In this case, the control unit 600 controls the switching valve 26 so as to decrease the radiator flow amount distribution, as long as the radiator flow amount distribution is not zero. As a result, the outlet water temperature Tw can be increased up to the target cooling water temperature Tt, without decreasing the heater flow amount distribution.

By contrast, when the difference (Tw - Tt) is greater than the second threshold +t, it is determined that the actual outlet water temperature Tw is excessively higher compared with the target cooling water temperature Tt (i.e., a positive determination is made at step S803 in FIG. 4). In this case, the control unit 600 controls the hot water pump 22 so as to increase the discharge flow amount of the hot water pump 22, as long as the hot water pump 22 has an extra capacity in its discharge capacity. As a result, the heater flow amount distribution of cooling water is increased, so that the outlet water temperature Tw can be decreased to the target cooling water temperature Tt.

Thus, a waste heat amount recovered by the heater 210 can be sufficiently secured. Simultaneously, the cooling performance of the engine 10 is controlled, so that the actual outlet water temperature Tw is controlled within an allowable temperature range [i.e., predetermined target cooling water temperature range [(Tt-t) - (Tt+t)]] of the target cooling water temperature.

### (Second Embodiment)

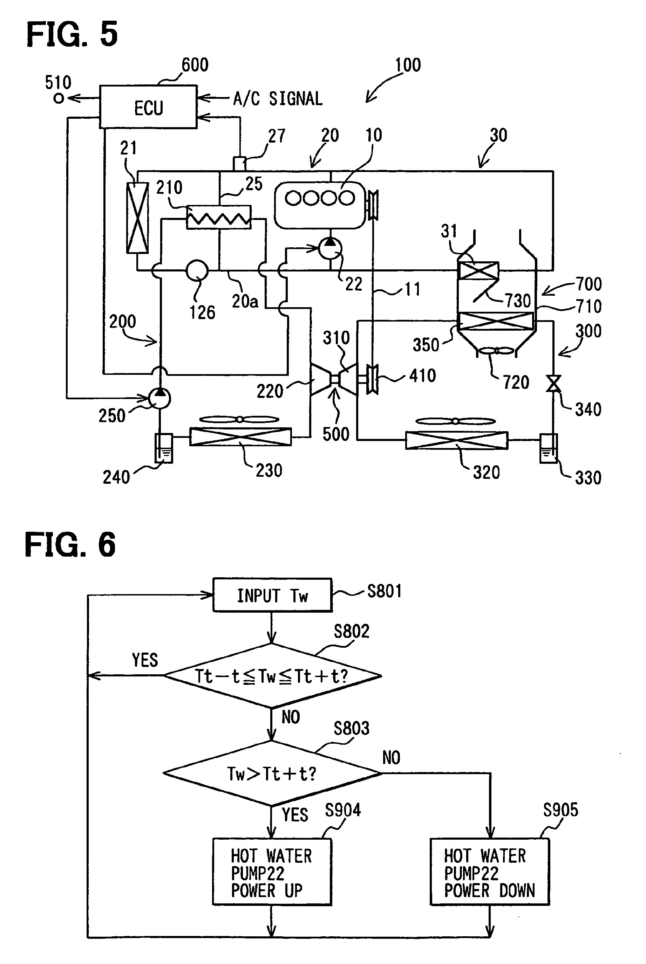

The second embodiment which does not form part of the present invention will be now described with reference to FIGS. 5 and 6.

A switching valve 126, which has a generally known thermostat, is used in the second embodiment, instead of the electrically driven switching valve 26 described in the first embodiment.

As shown in FIG. 5, the control unit 600 controls the hot water pump 22, but does not control the switching valve 126, in accordance with the outlet water temperature Tw of the engine 10. The thermostat responds to the temperature of cooling water flowing through the cooling water circuit section 20a, so that the radiator distribution flow amount is controlled by the switching valve 126 from zero to the maximum flow amount.

The hot water pump 22 is an electrically driven pump. Therefore, a discharge amount (discharge capacity) of the electrically driven hot water pump 22 is not limited due to a rotation speed of the engine 10, compared with a mechanical type pump. The discharge amount of the mechanical type pump is in proportion with respect to a rotation speed (revolution) of the engine 10 which is affected by a vehicle running condition.

Next, the control operation (second control operation) for controlling the flow amount of cooling water flowing through the cooling water circuit 20 is described in accordance with FIG. 6.

The second control operation includes a control process composed of step S801 to step S803 and a control process composed of step S904 and step S905. The control process composed of step S801 to step S803 is equivalent to that of the first embodiment.

At step S801, the control unit 600 inputs the cooling water temperature detection signal transmitted from the water temperature sensor 27, so as to store the actual outlet water temperature Tw. At step S802, it is determined whether the actual outlet water temperature Tw is within the allowable temperature range (Tt-t - Tt+t). That is, it is determined whether the relationship (Tt-t ≤ Tw ≤ Tt+t) is satisfied. When the outlet water temperature Tw is within the allowable temperature range [(Tt-t) - (Tt+t)], the control routine returns to step S801, without controlling the hot water pump 22 by the control unit 600. Otherwise, when the outlet water temperature Tw is out of the allowable temperature range [(Tt-t) - (Tt+t)], the control routine proceeds to step S803.

At step S803, it is determined whether the difference (Tw - Tt) is greater than the second threshold +t. When the difference is greater than the second threshold +t, the control routine proceeds to step S904. When the difference is less than the second threshold +t, i.e., it is determined that the difference is less than the first threshold -t, and the control routine proceeds to step S905.

Specifically, at step S904, the hot water pump 22 is controlled, so as to increase the discharge amount of the hot water pump 22. Subsequently, the control routine returns to step S801. In contrast, at step S905, the hot water pump 22 is controlled, so as to decrease the discharge amount of the hot water pump 22. Subsequently, the control routine returns to step S801.

According to the second embodiment described above, the outlet water temperature Tw of the engine 10 can be controlled within the allowable temperature range [(Tt-t) - (Tt+t)] of the target cooling water temperature. That is, the difference (Tw - Tt) can be controlled within the predetermined range (-t - +t), while the heater flow amount distribution is prioritized compared with the radiator flow amount distribution. That is, the control unit 600 controls the hot water pump 22 so as not to decrease the heater distribution flow amount, and not to increase the radiator distribution flow amount, as much as possible. Therefore, a waste heat amount radiated from the radiator 21 can be reduced as much as possible, so that an amount of waste heat recovered by the Rankine cycle 200 can be effectively increased.

According to the second embodiment described above, the control unit 600 controls the hot water pump 22, so that the outlet water temperature Tw of the engine 10 can be relatively easily controlled at a substantially constant temperature.

### (Third Embodiment)

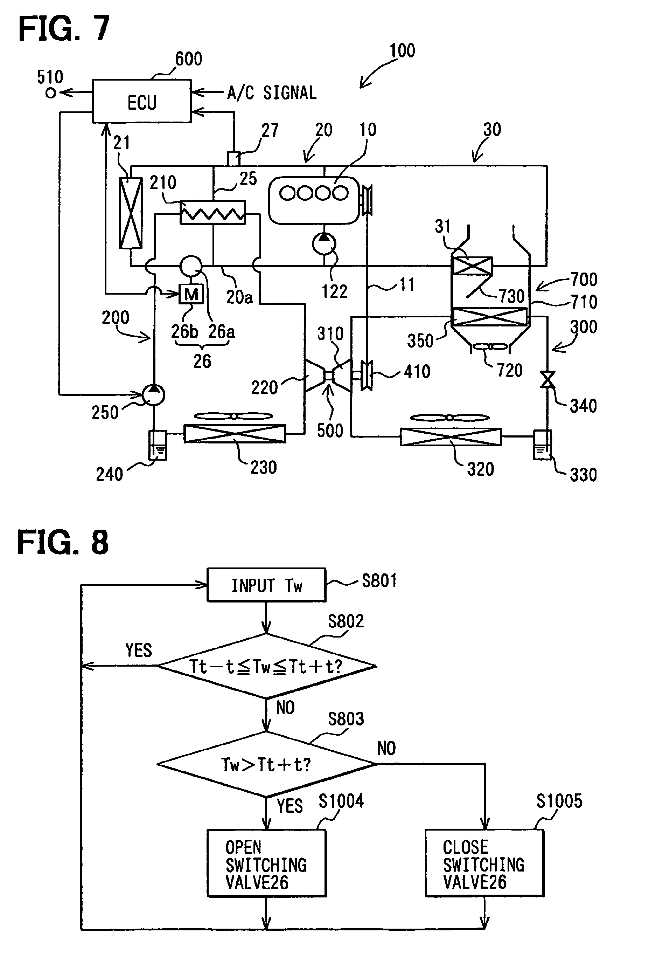

The third embodiment which does not form part of the present invention will be now described with reference to FIGS. 7 and 8.

As shown in FIG. 7, a hot water pump 122, which has a generally known mechanical structure, is used in the third embodiment, instead of the electrically driven hot water pump 22 described in the first embodiment. Further, the control unit 600 controls the switching valve 26, but does not control the hot water pump 122.

The switching valve 26 is an electrically driven switching valve. Therefore, the control unit 600 can control the switching valve 26 without delaying, compared with a conventional switching valve using a thermostat which has a relatively slow response control characteristic. The radiator distribution flow amount is controlled at a predetermined flow amount in accordance with the outlet water temperature Tw detected by the water temperature sensor 27, for example.

Next, the control operation (third control operation) for controlling the flow amount of cooling water flowing through the cooling water circuit 20 is described in accordance with FIG. 8.

The third control operation includes the control process composed of step S801 to step S803 and a control process composed of step S1004 and step S1005. The control process composed of step S801 to step S803 is equivalent to that of the first embodiment.

At step S801, the control unit 600 inputs the cooling water temperature detection signal transmitted from the water temperature sensor 27, so as to store the actual outlet water temperature Tw. At step S802, it is determined whether the actual outlet water temperature Tw is within the allowable temperature range [(Tt-t) - (Tt+t)]. When the outlet water temperature Tw is within the allowable temperature range [(Tt-t) - (Tt+t)], that is, when the relationship (Tt-t ≤ Tw ≤ Tt+t) is satisfied, the control routine returns to step S801, without controlling the hot water pump 22 by the control unit 600. Otherwise, when the outlet water temperature Tw is out of the allowable temperature range [(Tt-t) - (Tt+t)], that is, when the relationship (Tt-t ≤ Tw ≤ Tt+t) is not satisfied, the control routine proceeds to step S803.

At step S803, it is determined whether the difference (Tw - Tt) is greater than the second threshold +t. When the difference is greater than the second threshold +t, the control routine proceeds to step S1004. When the difference is less than the second threshold +t, it is determined that the difference (Tw - Tt) is less than the first threshold -t, and the control routine proceeds to step S1005.

Specifically, at step S1004, the switching valve 26 is controlled to be opened, so as to increase the radiator distribution flow amount. Subsequently, the control routine returns to step S801. At step S1005, the switching valve 26 is controlled to be closed, so as to decrease the radiator distribution flow amount. Subsequently, the control routine returns to step S801.

According to the fourth embodiment described above, the control unit 600 controls the switching valve 26 in accordance with the actual outlet water temperature Tw. Therefore, the outlet water temperature Tw can be stably controlled at the target water temperature Tt.

### (Fourth Embodiment)

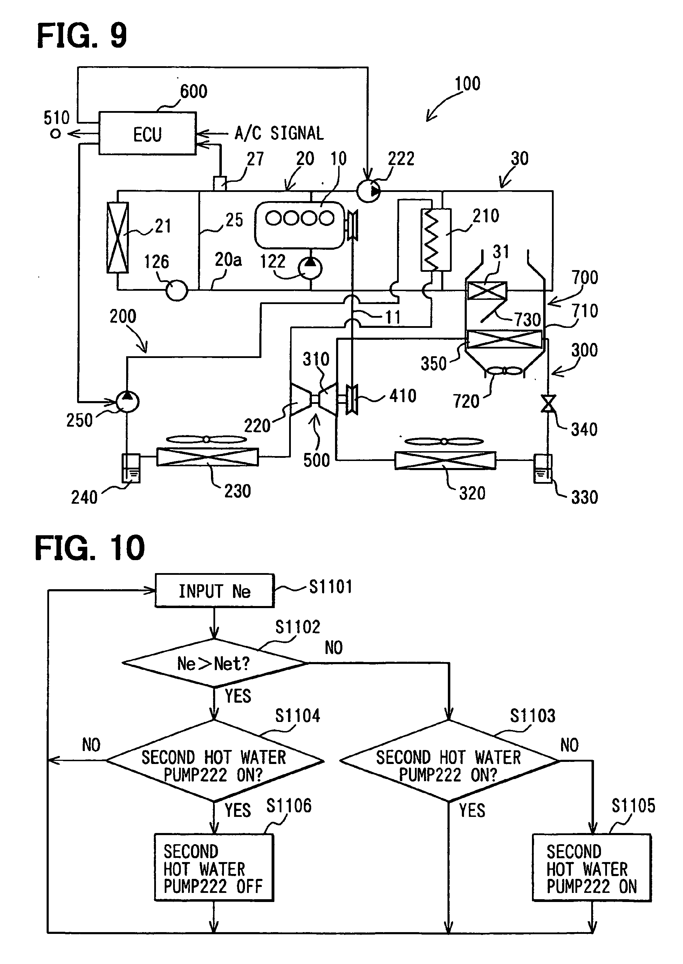

The fourth embodiment which describes the present invention will be now described with reference to FIGS. 9 and 10. As shown in FIG. 9, the heater 210 is arranged in the heater circuit 30 in the fourth embodiment.

The heater circuit 30 is connected to the cooling water circuit 20. The flow of the cooling water (hot water) is branched from the cooling water circuit 20, and is merged with the cooling water circuit 20, so as to construct the externally connected circuit. Even in this case, the heater 210 is arranged in parallel with the radiator 21 with respect to the flow of the cooling water.

In the fourth embodiment, the heater 210 is preferably arranged in parallel with the heater core 31 with respect to the flow of the cooling water. The heater core 31 is used as a heating heat exchanger for performing heat exchange between cooling water and air to be blown into the passenger compartment, to heat the air. Accordingly, a flow resistance of the heater circuit 30 including the heater core 31 is not increased, and a heating performance of a heating system is not affected by the heater 210.

Furthermore, the heater 210 arranged in the heater circuit 30 can be serially connected to the heater core 31 with respect to the flow of cooling water. The heater 210 can be arranged on the upstream side of the heater core 31 or the downstream side of the heater core 31, as needed. Even in this case, the heater 210 is arranged in parallel with the radiator 21 with respect to the flow of the cooling water.

Accordingly, a flow resistance of the cooling water circuit 20 including the radiator 21 is not increased, and a cooling performance of the engine 10 is not affected by the heater 210. The outlet water temperature Tw of the engine 10 is controlled at an appropriate temperature by the control unit 600. Therefore, heat energy of cooling water can be effectively used as waste heat energy by heat exchange performed by the heater 210, without affecting the performance of the engine 10, as same as the first embodiment.

Furthermore, in the fourth embodiment, the hot water pump 22 and the switching valve 26 described in the first embodiment are respectively replaced from the electrically driven type devices into the mechanical type devices 122, 126. Further, the hot water pump 122 is used as a first hot water pump, and the electrically driven pump 222 is provided as a second hot water pump. Accordingly, even in a case where a discharge amount of the mechanically driven hot water pump 122 is small because the revolution of the engine 10 is low, the second hot water pump 222 can secondarily increase the flow amount of cooling water flowing into the heater 210. When the rotation speed (revolution) of the engine 10 is low, the flow amount of cooling water flowing through the cooling water circuit 20 is relatively small. Even in this case, the second hot water pump 222 individually provided in the heater circuit 30 is secondarily operated, so that the flow amount of the cooling water flowing into the heater 210 can be increased. Therefore, a waste heat amount supplied to the Rankine cycle 200 can be stabilized.

Next, the control operation (fourth control operation) for controlling the flow amount of cooling water (hot water) flowing through the heater circuit 30 including the heater 210 is described in accordance with FIG. 10.

At step S1101, the control unit 600 inputs the rotation speed signal transmitted from the rotation sensor, so as to store rotation speed Ne (e.g., 900 rpm) of the engine 10.

At step S1102, it is determined whether the rotation speed Ne input in step S1101 is greater than a target speed Net (third threshold) of the engine rotation speed. When the rotation speed Ne is equal to or less than the third threshold Net, the control routine proceeds to step S1103. By contrast, when the rotation speed Ne is greater than the third threshold Net, the control routine proceeds to step S1104. The third threshold Net is the minimum value of the rotation speed Ne used for estimating the discharge amount of the hot water pump 122 by the control unit 600. When the rotation speed Ne is equal to or less than the third threshold Net, the discharge amount of the hot water pump 122 is equal to or less than a predetermined amount, for example.

When the rotation speed Ne is determined to be equal to or less than the third threshold Net at step S1102, the control routine proceeds to step S1103. At step S1103, it is determined whether the second hot water pump 222 is operating (turned ON). When the second hot water pump 222 is turned ON, the control routine returns to step S1101. That is, the second hot water pump 222 is kept to be turned ON. Otherwise, when the second water pump 222 is not turned ON (i.e., turned OFF), the control routine proceeds to step S1105.

When the rotation speed Ne is determined to be equal to or less than the third threshold at step S1102, and the second hot water pump 222 is determined to be turned OFF at step S1103, the second hot water pump 222 is turned ON at step S1105. Then the control routine returns to step S1101.

When the rotation speed Ne is determined to be greater than the third threshold Net at step S1102, it is determined whether the second hot water pump 222 is turned ON at step S1104. When the second hot water pump 222 is turned OFF, the control routine returns to step S1101. That is, the second hot water pump 222 is kept to be turned OFF. Otherwise, when the second hot water pump 222 is turned ON, the control routine proceeds to step S1106.

When the rotation speed Ne is determined to be greater than the third threshold at step S1102, and the second hot water pump 222 is determined to be turned ON at step S1104, the second hot water pump 222 is turned OFF at step S1106. Then the control routine returns to step S1101.

According to the fourth embodiment, the fourth control operation performed by the control unit 600 inputs the rotation speed Ne of the engine 10. When the rotation speed Ne is equal to or less than the target rotation speed Net, the fourth control operation estimates the discharge amount of the hot water pump 122 to be small, and turns the second hot water pump 222 ON. The hot water 122 circulates cooling water in the cooling water circuit 20 and the heater circuit 30. Thus, when the second hot water pump 222 is turned ON, the flow amount of cooling water, which flows into the heater 210 arranged in the heater circuit 30, can be increased. Because, the control unit 600 secondarily starts the second hot water pump 222 individually provided in the heater circuit 30, so that the flow amount of cooling water, which flows into the heater 210, can be increased. Therefore, waste heat amount supplied to the Rankine cycle 200 can be stabilized, even in a case where the flow amount of cooling water flowing through the cooling water circuit 20 is relatively small because the rotation speed Ne of the engine 10 is low.

In the fourth embodiment described above, the control unit 600 estimates the discharge amount of the hot water pump 122 based on the rotation speed Ne of the engine 10. However, the calculation basis of the discharge amount of the hot water pump 122 is not limited to the rotation speed Ne of the engine 10. The discharge amount of the hot water pump 122 can be calculated based on a rotation speed of a heat engine or a rotation speed of a rotating device, as long as the rotation speed of the rotating device is in proportion to the discharge amount of the hot water pump 122. The rotating device is a motor, an inverter, for example. When the hot water pomp 122 is driven by the heat engine or the rotating device as well as the engine 10, the discharge amount of the hot water pump 122 is limited by the rotation speed of the heat engine or the rotating device. When the control unit 600 determines the discharge amount of the hot water pump 122 to be small based on the rotation speed of the rotating device, the control unit 600 starts the second hot water pump 222 as a secondary device. Thus, the control unit 600 can stabilize the waste heat amount supplied to the Rankine cycle 200. Here, the rotating device is not only the engine 10, but also any one of the heat engine, the rotating device, and the like.

According to the first embodiment to the forth embodiment, the engine 10 and the engine waste heat recovery system 100 are operated based on the following operating modes.

### 1) First Operating Mode (Refrigerant cycle operating mode while Rankine cycle is stopped)

This first operating mode is used when the Rankine cycle is stopped, and an A/C (air conditioning) request is input, that is, the A/C signal is transmitted to the control unit 600. For example, the Rankine cycle is stopped, when cooling water is not sufficiently heated (e.g., 80°C in this embodiment). This situation is mainly in an operating condition immediately after starting the engine 10 or the like.

In this first operating mode, the hot water pump 22 (122) of the cooling water circuit 20 is operated, and the switching valve 26 (126) is closed, so that the radiator distribution flow amount becomes substantially zero, and cooling water flows through the bypass circuit 25. The pump 250 is stopped so that the Rankine cycle 200 is stopped. Furthermore, the solenoid clutch 510 is connected. Thus, driving power of the engine 10 is transmitted to the compressor 310 via the pulley 410 and the solenoid clutch 510, so that the compressor 310 is operated, and the refrigerant cycle 300 is operated.

The outlet water temperature Tw is equal to or less than the lower limit (Tt-t) of the target cooling water temperature in this first operating mode. The radiator distribution flow amount is controlled to be substantially zero, by either the electrically driven switching valve 26 controlled by the control unit 600 or the thermostat type switching valve 126 controlled by temperature sensing of the thermostat.

### 2) Second Operating Mode (Refrigerant cycle operating mode with Rankine cycle)

When the A/C request is input, and waste heat of the engine 10 can be sufficiently obtained, the Rankine cycle 200 is operated and driving power obtained from the Rankine cycle 200 is added to the compressor 310, so as to operate the refrigerant cycle, in this second operating mode.

The control unit 600 controls the pump 250 to be operated, so as to circulate the operation fluid through the Rankine cycle 200. Further, the solenoid clutch 510 is disconnected, so that driving power of the engine 10 is not transmitted to the compressor 310 via the pulley 410.

The operation fluid is pressurized by the pump 250, so as to be transferred to the heater 210 in the Rankine cycle 200. The operation fluid is heated by the high-temperature engine cooling water in the heater 210, so as to be super-heat vapor operation fluid, and introduced to the expansion device 220. The operation fluid is isentropically expanded and decompressed in the expansion device 220, and its heat energy and its pressure energy are partially transferred into rotation driving power. The decompressed operation fluid is condensed in the condenser 230, and separated into gas fluid and liquid fluid in the liquid receiver 240. The liquid fluid is drawn into the pump 250.

As a result, driving power obtained by the expansion device 220 is transmitted to the compressor 310, so that the compressor 310 can be rotated without rotating power of the engine 10. Therefore, fuel consumption of the engine 10 can be decreased.

### 3) Third Operating Mode (Combined operating mode of Rankine cycle and refrigerant cycle)

This third operating mode is used when the A/C request is input, a cooling load is relatively high (e.g., in summer), and waste heat of the engine 10 is sufficiently obtained. In this third operating mode, driving power of the expansion device 220 and driving power of the engine 10 are combined to operate the compressor 310.

The control unit 600 controls the pump 250 to be operated, so as to circulate the operation fluid through the Rankine cycle 200. The solenoid clutch 510 is connected so that driving power of the engine 10 is transmitted to the compressor 310 via the pulley 410.

Driving power of the expansion device 220 and driving power of the engine 10 are added to the compressor 310, so as to increase a refrigerant discharge amount of the compressor 310, so that cooling performance can be enhanced.

### 4) Fourth Operating Mode (Refrigerant cycle and power recovery mode due to Rankine cycle mode)

This fourth operating mode is used when the A/C request is input, a cooling load is relatively low (e.g., in spring or autumn), and driving power needed to drive the compressor 310 is relatively small. Therefore, surplus driving power obtained by the Rankine cycle 200 is added to the engine 10, in this operating mode.

The control unit 600 controls the pump 250 in the same manner as that of the 3) Third Operating Mode. In the fourth operating mode, the operation fluid is circulated through the Rankine cycle 200, so that the Rankine cycle 200 is operated. The solenoid clutch 510 is connected, so that driving power of the engine 10 is transmitted to the compressor 310 via the pulley 410.

Driving power is added from the expansion device 220 to the compressor 310 in accordance with a cooling load, so that the compressor 310 is driven. Surplus driving power of the expansion device 220 is supplied to the pulley 410, so as to reduce driving power of the engine 10. As a result, a power recovery operation can be performed for assisting a shaft output of the engine 10.

### 5) Fifth Operating Mode (Power recovery operating mode)

A variable displacement type compressor 310 is used in this fifth operating mode. This operating mode is used when the refrigerant cycle and power recovery mode due to the Rankine cycle is selected and the A/C request is not input, for example. In this operating mode, driving power needed for the variable displacement type compressor 310 is set at substantially zero by the control unit 600, and the expansion device 220 assists the shaft output of the engine 10.

That is, the control unit 600 controls discharge amount of the compressor 310 to be substantially zero in the fifth operating mode.

### (Fifth embodiment)

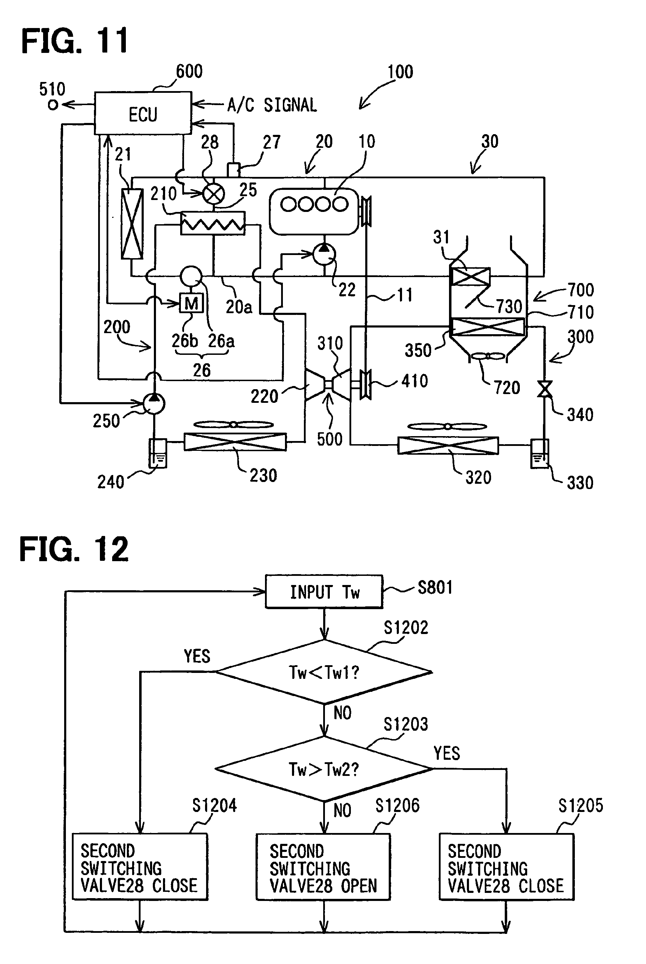

The fifth embodiment which does not form part of the present invention will be now described with reference to FIGS. 11 and 12.

In general, the heaters 210 described in the first embodiment to the fourth embodiment have the cooling water passage for introducing cooling water and the operation fluid passage for introducing the operation fluid. Therefore, when cooling water is introduced into the cooling water passage, the operation fluid flowing through the operation fluid passage may be heated by waste heat of cooling water. In this situation, heat exchange is performed between the cooling water and the operation fluid, even when the Rankine cycle 200 is not operated (Rankine cycle OFF). Waste heat energy of cooling water is not effectively used while the Rankine cycle is not operated. Heat energy of cooling water, which is used for heating operation fluid, is not effectively used, and becomes a heat loss. The heater 210 is arranged in parallel with the radiator 21 in the cooling water circuit 20. Furthermore, a heat capacity of cooling water flowing through the heater 210 is added to a heat capacity of the cooling water circuit 20, and the total heat capacity of the cooling water circuit 20 is increased. Accordingly, a warming-up performance of the engine 10 may be decreased, depending on an engine condition when the engine is started.

In the fifth embodiment, a waste heat recovery system is constructed so that waste heat of cooling water is used without affecting the cooling performance of the engine 10 and the warming-up performance of the engine 10. A switching valve 28 is used as a second switching unit 28 arranged at an upstream side of the heater 210 in the bypass circuit 25 with respect to the flow of cooling water, as described in the first embodiment.

As shown in FIG. 11, the electrically driven second switching unit 28 is provided on an inlet side of the heater 210 from which cooling water is introduced. The second switching unit 28 has a switching valve structure which opens and closes a cooling water passage through which cooling water flows into the heater 210. For example, the second switching unit 28 can be an ON-OFF type solenoid valve, which can switch between two positions (i.e., open and close). The second switching valve 28 is controlled by the control unit 600.

Next, the control operation (fifth control operation) for controlling the second switching valve 28 is described referring to FIG. 12. The second switching valve 28 opens and closes the flow passage of cooling water (hot water) passing through the bypass circuit 25 in which the heater 210 and the second switching valve 28 are arranged. The hot water pump 22 and the switching valve 26 are operated based on the control operation (first control operation) shown in FIG. 4, in the fifth embodiment. The target water temperature Tt is 95°C, the first threshold -t is -5°C and the second threshold +t is +5°C, for example, in the fifth embodiment.

At step S801, the control unit 600 inputs the cooling water temperature detection signal transmitted from the water temperature sensor 27, so as to store the outlet water temperature Tw of the engine 10.

At step S1202, it is determined whether the outlet water temperature Tw stored at step S801 is less than a lower limit water temperature Tw1 (fourth threshold) in a Rankine cycle operation. When the outlet water temperature Tw is less than the fourth threshold Tw1, the control routine proceeds to step S1204. Otherwise, when the outlet water temperature Tw is equal to or greater than the fourth threshold Tw1, the control routine proceeds to step S1203. The fourth threshold Tw1 is the lower limit water temperature (e.g., 85°C in the fifth embodiment) for permitting an operation of the Rankine cycle 200 by introducing cooling water (hot water) heated in the engine 10 into the heater 210, without affecting a heating performance of the engine 10.

At step S1203, it is determined whether the outlet water temperature Tw stored at step S801 is greater than a forcibly closing water temperature (fifth threshold) Tw2. When the outlet water temperature Tw is greater than the fifth threshold Tw2, the control routine proceeds to step S1205. Otherwise, when the outlet water temperature Tw is equal to or less than the fifth threshold Tw2, the control routine proceeds to step S1206. The fifth threshold Tw2 is an upper limit water temperature (e.g., 110°C in the fifth embodiment). A cooling performance of the engine 10 is prioritized when the outlet water temperature Tw is greater than the fifth threshold Tw2 (fifth threshold Tw2 > fourth threshold Tw1).

At step S1204, the outlet water temperature Tw is determined to be less than the lower limit water temperature Tw1, and the second switching valve 28 is closed. While the engine 10 is in a warming-up mode, the outlet water temperature Tw is less than the lower limit water temperature Tw1. In this case, the cooling water passage is closed, and cooling water (hot water) is prohibited from flowing into the heater 210.

At step S1205, the outlet water temperature Tw is determined to be greater than the upper limit water temperature Tw2. The cooling performance of the engine 10 is prioritized when the outlet water temperature Tw is excessively high, that is, the second switching valve 28 is closed. When a high-load operation is performed, the outlet water temperature Tw may be greater than the upper limit water temperature Tw2 (110°C). In this case, the cooling performance of the engine 10 is prioritized. In such operating condition, the bypass circuit 25 is closed by the second switching valve 28, so that the flow amount of cooling water introduced into the radiator 21 is increased to prioritize the cooling performance of the engine 10.

At step S1206, the outlet water temperature Tw is determined to be between the lower limit water temperature Tw1 and the upper limit water temperature Tw2. Therefore, the second switching valve 28 is opened, and the control routine returns to step S801. The Rankine cycle operation can be performed when the outlet water temperature Tw is equal to or higher than the lower limit water temperature Tw1.

The control steps S801, S1202, S1203 and S1205 construct a forcibly closing control means, which forcibly controls the electrically driven second switching valve 28 when the outlet water temperature Tw is greater than the predetermined water temperature Tw2.

According to the fifth embodiment, the second switching valve 28 is provided on the inlet side of the heater 210, for opening and closing the flow passage of cooling water passing through the heater 210. While the outlet water temperature Tw is less than the lower limit water temperature Tw1 in the warming-up mode, the second switching valve 28 is closed so that cooling water (hot water) can be prevented from flowing into the heater 210. Though the heat capacity of the entire cooling water circuit 20 is increased by addition of the heater 210, cooling water (hot water) does not flow into the heater 210. Accordingly, the addition of the heater 210 does not affect the warming-up performance of the engine 10.

The second switching valve 28 in the fifth embodiment, has an electrically driven structure. Therefore, the second switching valve 28 is suitable to be applied to a control method which controls the second switching valve 28 in accordance with an operating condition, such as a warming-up operation mode of the engine 10. In the control method, when the outlet water temperature Tw is in the predetermined temperature range, the second switching valve 28 is controlled so as to introduce cooling water (hot water) into the heater 210, for example. Thus, waste heat energy of the cooling water (thermal medium) can be effectively used without affecting the cooling performance of the engine 10 and the heating performance of the engine 10. The predetermined temperature range is between the lower limit water temperature Tw1 and the higher limit water temperature Tw2, for example.

The fifth embodiment has the forcibly closing control means constructed with the control steps S801, S1202, S1203 and S1205. When the operation is in a high-load operating condition or the like, the outlet water temperature Tw becomes greater than the upper limit water temperature Tw2 (110°C), at which the cooling performance of the engine 10 is prioritized. In this situation, the flow passage of cooling water through which cooling water is introduced into the heater 210 for supplying waste heat energy to the side of the Rankin cycle circuit 200, is closed to prioritize the cooling performance. In this case, the bypass circuit 25 is closed so as to increase the flow amount of the cooling water introduced into the radiator 21. Therefore, the cooling performance of the engine 10 can be prioritized.

### (Sixth embodiment)

The sixth embodiment which does not form part of the present invention will be now described with reference to FIG. 13. As shown in FIG. 13, a second switching valve 128 employing a generally known thermostat is used in the six embodiment, instead of the electrically driven second switching valve 28 described in the fifth embodiment.

The second switching valve 128 is provided on the inlet side of the heater 210, through which cooling water is introduced. When the outlet water temperature Tw is greater than the lower limit water temperature Tw1 (e.g., 85°C in the sixth embodiment), the thermostat opens a valve member in the switching valve 128, so that cooling water flows through the heater 210. Therefore, in the structure of the sixth embodiment, the waste heat energy of the thermal medium can be effectively used, without affecting the cooling performance of the engine 10 and the heating performance of the engine 10.

In this case, when the cooling performance is sufficiently secured by the radiator 21 or the like, a production cost can be reduced, compared with an electrically driven switching valve using a solenoid for example. Besides, a power source, such as a battery, is not needed when the second switching valve 128 is energized (opened or closed), so that an electrically power consumption can be reduced.

In the fifth embodiment and the sixth embodiment, the heater 210 is arranged in the bypass circuit 25 of the cooling water circuit 20. The second switching unit 28, 128 can be preferably applied to a structure in which the heater 210 is provided in the heater circuit 30, to open and close the flow passage of the cooling water to be introduced into the heater 210.

In the fifth embodiment and the sixth embodiment, when cooling water flows through the heater 210, the radiator flow amount distribution decreases. Further, the heater 210 and the radiator 21 are arranged in parallel with respect to the cooling water flow. However, only in a case where the outlet water temperature Tw is equal to or greater than the lower limit water temperature Tw1, cooling water circulating in the cooling water circuit 20 partially flows through the heater 210. Accordingly, the cooling performance of the engine 10 can be prevented from being affected by decrease of the radiator flow amount distribution.

Because the cooling performance of the engine 10 can be secured, the discharge capacity of the hot water pump 22 does not need to be increased for circulating cooling water through the cooling water circuit 20, even when a cooling capacity of the radiator 21 is limited. Engine power and a fuel consumption efficiency can be prevented from declining due to increase of an engine power consumption which is caused by upsizing the hot water pump 22.

The Rankine cycle 200 and the refrigerant cycle 300 are independently provided, so that the expansion device 220 can be operated regardless of an operation of the refrigerant cycle 300. As a result, waste heat of the engine 10 is recovered by the heater 210 using cooling water as a heat source. Driving power is generated in the expansion device 220 so as to reduce the driving power for rotating the driving devices which drives such as the compressor 310 in the refrigerant cycle 300. Here, the driving devices include the one-way clutch 520, the one-way clutch 530, the solenoid clutch 510 and the pulley 410.

Although the present invention has been fully described in connection with the fourth embodiment thereof with reference to drawings 9 and 10, it is to be noted that various changes and modifications will become apparent to those skilled in the art.

For example, in the above-described first to sixth embodiments, the engine 10 is used as a heat source of waste heat (heat generating element). However, the heat source can be any heat generating elements from which waste energy can be recovered. The heat generating elements can be a heat engine such as an internal combustion engine, a heat generating element such as a motor or an inverter, a fuel cell such as a FC stack, and the like.

The heat recovery system in the present invention is preferably applied to a hybrid vehicle employing a rotating device such as a motor. The heat recovery system in the present invention is preferably applied to a fuel cell powered vehicle employing a refrigerant cycle including a fuel cell such as a FC stack. The FC stack disposed in the fuel cell powered vehicle generates heat, when electricity is generated by performing chemical reaction between hydrogen and oxygen. The refrigerant cycle includes a thermal medium circulation circuit, so as to cool the FC stack. Thermal medium such as refrigerant or cooling water is circulated in the thermal medium circulation circuit. A driving source for driving a vehicle can be switched between a motor disposed in the hybrid vehicle and an internal combustion engine, in accordance with a driving condition of the hybrid vehicle. The motor is used as a generator when the vehicle is driven using the internal combustion engine as the driving source. The heat recovery system in the present invention includes a thermal medium circulation circuit. When the motor is used, the motor generates heat. Therefore, thermal medium such as cooling water is circulated so as to cool the motor in the thermal medium circulation circuit.

In the above-described first to sixth embodiments, the operation fluid is used in the Rankine cycle, and the refrigerant is used in the refrigerant cycle. However, in the Rankine cycle, the same refrigerant as in the refrigerant cycle can be used as the operation fluid.

Such changes and modifications are to be understood as being within the scope of the present invention as defined by the appended claims.

## Claims

1. A waste heat recovery system of a heat source that is cooled by a circulation of a thermal medium, the system comprising:
a cooling heat exchanger (21) for cooling the thermal medium, disposed in a thermal medium circulating circuit (20) through which the thermal medium is circulated between the cooling heat exchanger (21) and the heat source (10); and
a Rankine cycle (200) including
a heater (210) that performs heat exchange between an operation fluid and the thermal medium heated by the heat source (10) so as to heat the operation fluid, and
an expansion device (220) that expands the operation fluid, which is heated by the heater (210) to be evaporated, so as to generate a driving power, wherein
the heater (210) is arranged in parallel with the cooling heat exchanger (21) in such a manner that the thermal medium flowing through the heater (210) bypasses the cooling heat exchanger (21),
further comprising a heater circuit (30) that includes a heating heat exchanger (31) which performs heat exchange between blown air and thermal medium heated by the heat source (10) so as to heat the blown air, wherein the heater (210) is arranged in the heater circuit (30), and
a pumping unit (122) disposed is the thermal X medium circulating circuit (20), to circulate the thermal medium.

2. The waste heat recovery system of the heat source according to claim 1, **characterized by** further comprising:
a switching unit (26, 126) disposed in the thermal medium circulating circuit (20) to adjust a flow distribution between a flow amount of thermal medium to be introduced into the heater (210) and a flow amount of thermal medium passing through the cooling heat exchanger (21),
wherein at least one of a discharge capacity of the pumping unit (122) and the flow distribution distributed by the switching unit (26, 126) is variable.

3. The waste heat recovery system of the heat source according to claim 2, **characterized by** further comprising a control unit (600) for controlling at least one of the pumping unit (26, 126) and the switching unit (26, 126).

4. The waste heat recovery system of the heat source according to claim 3, **characterized in that**, the control unit (600) controls at least one of the pumping unit (26, 126) and the switching unit (26, 126) based on temperature of thermal medium discharged from the heat source (10) in the thermal medium circulating circuit (20).

5. The waste heat recovery system of the heat source according to claim 4, **characterized in that**:
the control unit (600) calculates a difference between a target thermal medium temperature (Tt) and an actual temperature (Tw) of the thermal medium discharged from the heat source (10);
when the difference is less than a first threshold (-t), the control unit (600) determines that a temperature of the heat source (10) is excessively low, and controls the switching unit (26, 126) so as to decrease a distribution amount of thermal medium flowing into the cooling heat exchanger (21) when the distribution amount is not substantially zero; and
when the difference is greater than a second threshold (+t), that is higher than the first threshold, the control unit (600) determines that the temperature of the heat source (10) is excessively high, and controls the pumping unit (26, 126) so as to increase the discharge capacity when the pumping unit (26, 126) has an extra discharge capacity.

6. The waste heat recovery system of the heat source according to claim 4, **characterized in that**:
the control unit (600) calculates a difference between a target thermal medium temperature (Tt) and an actual temperature (Tw) of the thermal medium discharged from the heat source (10);
when the difference is less than a first threshold (-t), the control unit (600) determines that a temperature of the heat source (10) is excessively low, and controls the pumping unit (26, 126) so as to decrease the discharge capacity of the pumping unit (26, 126); and
when the difference is greater than a second threshold (+t) that is larger than the first threshold (-t), the control unit (600) determines that the temperature of the heat source (10) is excessively high, and controls the pumping unit (26, 126) so as to increase the discharge capacity.

7. The waste heat recovery system of the heat source according to claim 4, **characterized in that**:
the control unit (600) calculates a difference between a target thermal medium temperature (Tt) and an actual temperature (Tw) of the thermal medium discharged from the heat source (10);
when the difference is less than a first threshold (-t), the control unit (600) determines that a temperature of the heat source (10) is excessively low, and controls the switching unit (26, 126) so as to decrease a distribution amount of thermal medium distributed by the switching unit (26, 126) to the cooling heat exchanger (21); and
when the difference is greater than a second threshold (+t), that is higher than the first threshold, the control unit (600) determines temperature of the heat source (10) is excessively high, and controls the switching unit (26, 126) so as to increase the distribution amount.

8. The waste heat recovery system of the heat source according to claim 1, **characterized in that**:
the heater circuit (30) further includes a second pumping unit (222) in addition to the pumping unit (22, 122, 126) for circulating the thermal medium; and
the second pumping unit (222) has a variable discharge capacity.

9. The waste heat recovery system of the heat source according to claim 8, **characterized in that**:
the heat source (10) is a rotating device (10); and
the second pumping unit (222) is controlled based on a rotation speed of the rotating device (10).

10. The waste heat recovery system of the heat source according to any one of claims 1 to 9, **characterized by**, further comprising a second switching unit (28, 128) for opening and closing a flow passage of thermal medium flowing into the heater, wherein the second switching unit (28, 128) is located on one of an inlet side of the heater (210) and an outlet side of the heater (210).

11. The waste heat recovery system of the heat source according to claim 10, **characterized in that**, the second switching unit (28, 128) is provided to change a flow amount flowing into the heater.

12. The waste heat recovery system of the heat source according to claim 11, **characterized by**, further comprising a forcibly closing control means (steps S801, S1202, S1203, S1205) that forcibly controls the second switching unit (28, 128) when a temperature of the thermal medium is equal to or greater than a predetermined temperature.

13. The waste heat recovery system of the heat source according to any one of claims 1 to 12, further comprising:
a driving device (520, 530, 510, 410) that is disposed to obtain a driving power generated in the heat source (10); and
a refrigerant cycle (300) that includes a compressor (310) driven by the driving device (520, 530, 510, 410) for compressing and circulating refrigerant,
**characterized in that**:
the expansion device (220) is mechanically coupled with the compressor (310); and
the expansion device (220) is disposed to add the driving power generated in the expansion device to the compressor (310), when the driving power is generated in the expansion device (220).

14. The waste heat recovery system of the heat source according to claim 1, further comprising a second pumping unit (222) for circulating the thermal medium to increase the flow amount of cooling water flowing into the heater (210), wherein the second unit has a variable discharge capacity.

15. The waste heat recovery system of the heat source according to claim 14, wherein: the heat source (10) is a rotating device; and
the second pumping unit (222) is controlled based on a rotation speed of the rotating device(10).

16. The waste heat recovery system of the heat source according to claim 14, wherein the heat source (10) is an engine (10),
the pump unit (22, 122, 126) is a mechanical type device driven by the engine (10), and
the second pumping unit (222) is an electrically driven device so that the second pumping unit (222) can secondarily increase the flow amount of cooling water flowing into the heater (210) even if the flow amount of cooling water flowing through the cooling water circuit (20) is relatively low due to low rotation speed of the engine (10).

## Patentansprüche

1. Abwärme-Wiedergewinnungssystem einer Wärmequelle, welche durch eine Zirkulation eines thermischen Mediums gekühlt wird, wobei das System umfasst:
einen Kühl-Wärmetauscher (21) zum Kühlen des thermischen Mediums, welcher in einem Zirkulationskreislauf (20) für ein thermisches Medium angeordnet ist, durch welches das thermische Medium zirkuliert wird, dies zwischen dem Kühl-Wärmetauscher (21) und der Wärmequelle (10); und
einen Rankine -Kreislauf (200), enthaltend
ein Heizgerät (210) welches Wärmetausch zwischen einem Arbeitsfluid und dem thermischen Medium ausführt, welches durch die Wärmequelle (10) erwärmt wird, um so das Arbeitsfluid zu erwärmen, und
eine Expansionseinrichtung (220), welche das Arbeitsfluid expandiert, welches durch das Heizgerät (210) erwärmt wird, um verdampft zu werden, um so eine Antriebskraft zu erzeugen, wobei
das Heizgerät (210) parallel zu dem Kühl-Wärmetauscher (21) in solch einer Weise angeordnet ist, dass das thermische Medium, welches durch das Heizgerät (210) hindurchströmt, den Kühl-Wärmetauscher (21) umgeht,
ferner umfassend einen Heizkreislauf (30), welcher einen Heiz-Wärmetauscher (31) enthält, welcher Wärmetausch zwischen Blasluft und thermischem Medium, welches durch die Wärmequelle (10) erwärmt wurde, ausführt, um so die Blasluft zu erwärmen, wobei das Heizgerät (210) in dem Heizkreislauf (30) angeordnet ist, und
eine Pumpeinheit (122), die in dem Zirkulationskreislauf (20) für thermisches Medium angeordnet ist, um das thermische Medium zu zirkulieren.

2. Abwärme-Wiedergewinnungssystem der Wärmequelle gemäß Anspruch 1, **dadurch gekennzeichnet, dass** es ferner umfasst:
eine Schalteinheit (26, 126), die in dem Zirkulationskreis (20) für thermisches Medium angeordnet ist, um eine Strömungsverteilung zwischen einer Strömungsmenge von thermischem Medium, welches in das Heizgerät (210) einzuleiten ist, und einer Strömungsmenge von thermischem Medium, welches durch den Kühl-Wärmetauscher (21) hindurchtritt, einzustellen,
wobei zumindest eines von Abgabekapazität der Pumpeneinheit (122) und Strömungsverteilung, welche durch die Schalteinheit (26, 126) verteilt wird, variabel ist.

3. Abwärme-Wiedergewinnungssystem der Wärmequelle gemäß Anspruch 2, **dadurch gekennzeichnet, dass** es ferner eine Steuereinheit (600) zum Steuern von zumindest einem von Pumpeinheit (26, 126) und Schalteinheit (26, 126) umfasst.

4. Abwärme-Wiedergewinnungssystem der Wärmequelle gemäß Anspruch 3, **dadurch gekennzeichnet, dass** die Steuereinheit (600) zumindest eines von Pumpeinheit (26, 126) und Schalteinheit (26, 126) auf der Grundlage von Temperatur von thermischem Medium steuert, welches aus der Wärmequelle (10) in den Zirkulationskreislauf (20) für thermisches Medium abgegeben wird.

5. Abwärme-Wiedergewinnungssystem der Wärmequelle gemäß Anspruch 4, **dadurch gekennzeichnet, dass**:
die Steuereinheit (600) eine Differenz zwischen einer Zieltemperatur (Tt) des thermischen Medium und einer tatsächlichen Temperatur (Tw) des thermischen Mediums, welches aus der Wärmequelle (10) abgegeben wird, berechnet;
wobei dann, wenn die Differenz weniger als eine erste Schwelle (-t) ist, die Steuereinheit (600) bestimmt, dass eine Temperatur der Wärmequelle (10) übermäßig niedrig ist, und die Schalteinheit (26, 126) dahingehend steuert, dass diese eine Verteilungsmenge des thermischen Mediums, welches in den Kühl-Wärmetauscher (21) strömt, zu erhöhen, wenn die Verteilungsmenge nicht im Wesentlichen Null ist; und
wenn die Differenz größer als eine zweite Schwelle (+t) ist, welche höher als die erste Schwelle ist, die Steuereinheit (600) bestimmt, dass die Temperatur der Wärmequelle (10) übermäßig hoch ist, und die Pumpeinheit (26, 126) dahingehend steuert, dass die Abgabekapazität erhöht wird, wenn die Pumpeinheit (26, 126) eine Extra-Abgabekapazität hat.

6. Abwärme-Wiedergewinnungssystem der Wärmequelle gemäß Anspruch 4, **dadurch gekennzeichnet, dass**:
die Steuereinheit (600) eine Differenz zwischen einer Zieltemperatur (Tt) von thermischem Medium und einer tatsächlichen Temperatur (Tw) des thermischen Mediums, welches aus der Wärmequelle (10) abgegeben wird, berechnet;
wobei dann, wenn die Differenz weniger als eine erste Schwelle (-t) ist, die Steuereinheit (600) bestimmt, dass eine Temperatur der Wärmequelle (19) übermäßig niedrig ist, und die Pumpeinheit (26, 126) dahingehend steuert, dass diese die Abgabekapazität der Pumpeinheit (26, 126) senkt; und
wenn die Differenz größer als eine zweite Schwelle (+t) ist, welche größer als die erste Schwelle (-t) ist, die Steuereinheit (600) bestimmt, dass die Temperatur der Wärmequelle (10) übermäßig hoch ist, und die Pumpeinheit (26, 126) dahingehend steuert, die Abgabekapazität zu erhöhen.

7. Abwärme-Wiedergewinnungssystem der Wärmequelle gemäß Anspruch 4, **dadurch gekennzeichnet, dass**:
die Steuereinheit (600) eine Differenz zwischen einer Zieltemperatur (Tt) von thermischem Medium und einer tatsächlichen Temperatur (Tw) des thermischen Mediums, welches von der Wärmequelle (10) abgegeben wird, berechnet;
wobei dann, wenn die Differenz weniger als eine erste Schwelle (-t) ist, die Steuereinheit (600) bestimmt, dass eine Temperatur der Wärmequelle (10) übermäßig niedrig ist, und die Schalteinheit (26, 126) dahingehend steuert, dass diese eine Verteilungsmenge des thermischen Mediums, welches durch die Schalteinheit (26, 126) zu dem Kühl-Wärmetauscher (21) verteilt wird, senkt; und
wenn die Differenz niedriger als eine zweite Schwelle (+t) ist, welche höher als die erste Schwelle ist, die Steuereinheit (600) bestimmt, dass die Temperatur der Wärmequelle (10) übermäßig hoch ist, und die Schalteinheit (26, 126) dahingehend steuert, die Verteilungsmenge zu erhöhen.

8. Abwärme-Wiedergewinnungssystem der Wärmequelle gemäß Anspruch 1, **dadurch gekennzeichnet, dass**:
der Heizkreislauf (30) ferner eine zweite Pumpeinheit (222) zusätzlich zu der Pumpeinheit (22, 122, 126) enthält; und
die zweite Pumpeinheit (222) eine variable Abgabekapazität aufweist.

9. Abwärme-Wiedergewinnungssystem der Wärmequelle gemäß Anspruch 8, **dadurch gekennzeichnet, dass**:
die Wärmequelle (10) eine rotierende Einrichtung (10) ist; und
die zweite Pumpeinheit (222) auf der Grundlage einer Drehgeschwindigkeit der Rotationseinrichtung (10) gesteuert wird.

10. Abwärme-Wiedergewinnungssystem der Wärmequelle gemäß irgendeinem der Ansprüche 1 bis 9, **dadurch gekennzeichnet dass** sie ferner umfasst eine zweite Schalteinheit (28, 128) zum Öffnen und Schließen eines Strömungsdurchtritts des thermischen Mediums, welches in das Heizgerät strömt, wobei die zweite Schalteinheit (28, 128) auf einem von einer Einlassseite des Heizgeräts (210) und einer Auslassseite des Heizergeräts (210) ist.

11. Abwärme-Wiedergewinnungssystem der Wärmequelle gemäß Anspruch 10, **dadurch gekennzeichnet, dass** die zweite Schalteinheit (28, 128) zum Ändern einer Strömungsmenge, welche in das Heizgerät strömt, vorgesehen ist.

12. Abwärme-Wiedergewinnungssystem der Wärmequelle gemäß Anspruch 11, **dadurch gekennzeichnet, dass** es ferner umfasst ein Zwangsschließungs-Steuermittel (Schritte S801, S1202, S1203, S1205), welche die zweite Schalteinheit (28, 128) zwangsweise steuert, wenn eine Temperatur des thermischen Mediums gleich oder größer als eine vorbestimmte Temperatur ist.

13. Abwärme-Wiedergewinnungssystem der Wärmequelle gemäß irgendeinem der Ansprüche 1 bis 12, ferner umfassend:
eine Antriebseinrichtung (520, 530, 510, 410), welche zum Erhalten einer Antriebskraft angeordnet ist, welche in der Wärmequelle (10) erzeugt wird; und
einen Kältemittel-Kreislauf (300), welcher einen Kompressor (310) enthält, der durch die Antriebseinrichtung (520, 530, 510, 410) zum Komprimieren und Zirkulieren von Kältemittel angetrieben wird,
**dadurch gekennzeichnet, dass**:
die Expansionseinrichtung (220) mechanisch an den Kompressor (310) gekoppelt ist; und
die Expansionseinrichtung (220) dahingehend angeordnet ist, die in der Expansionseinrichtung erzeugte Antriebskraft an den Kompressor (310) hinzu zu geben, wenn die Antriebskraft in der Expansionseinrichtung (220) erzeugt wird.

14. Abwärme-Wiedergewinnungssystem der Wärmequelle gemäß Anspruch 1, ferner umfassend eine zweite Pumpeinheit (222) zum Zirkulieren des thermischen Mediums zum Erhöhen der Strömungsmenge von Kühlwasser, welches in den Wärmetauscher (210) strömt, wobei die zweite Pumpeinheit eine variable Abgabekapazität aufweist.

15. Abwärme-Wiedergewinnungssystem der Wärmequelle gemäß Anspruch 14, wobei: die Wärmequelle (10) eine rotierende Einrichtung ist; und
die zweite Pumpeinheit (222) auf der Grundlage einer Rotationsgeschwindigkeit der rotierenden Einrichtung (10) gesteuert wird.

16. Abwärme-Wiedergewinnungssystem der Wärmequelle gemäß Anspruch 14, wobei die Wärmequelle (10) ein Motor ist;
die Pumpeinheit (22, 122, 126) eine Einrichtung mechanischer Art ist, welche durch den Motor (10) angetrieben wird, und
die zweite Pumpeinheit (222) eine elektrisch angetriebene Einrichtung ist, so dass die zweite Pumpeinheit (222) die Strömungsmenge von Kühlwasser, welches in den Heizer (210) strömt, sekundär erhöhen kann, selbst wenn die Strömungsmenge des durch den Kühlwasser-Kreislauf (20) strömenden Kühlwassers infolge niedriger Rotationsgeschwindigkeit des Motors (10) relativ niedrig ist.

## Revendications

1. Système de récupération de chaleur perdue d'une source de chaleur qui est refroidie par une circulation d'un milieu thermique, le système comprenant :
un échangeur thermique de refroidissement (21) pour refroidir le milieu thermique, disposé dans un circuit de circulation de milieu thermique (20) à travers lequel le milieu thermique est fait circuler entre l'échangeur thermique de refroidissement (21) et la source de chaleur (10) ; et
un cycle de Rankine (200) incluant
un réchauffeur (210) qui effectue un échange de chaleur entre un fluide opérationnel et le milieu thermique chauffé par la source de chaleur (10) de façon à chauffer le fluide opérationnel, et
un dispositif de détente (220) qui détend le fluide opérationnel, qui est chauffé par le réchauffeur (210) pour être évaporé, de façon à générer une énergie motrice, dans lequel
le réchauffeur (210) est agencé en parallèle avec l'échangeur thermique de refroidissement (21) de telle façon que le milieu thermique s'écoulant à travers le réchauffeur (210) contourne l'échangeur thermique de refroidissement (21),
comprenant en outre un circuit de réchauffeur (30) qui inclut un échangeur thermique de réchauffement (31) qui effectue un échange de chaleur entre de l'air soufflé et le milieu thermique chauffé par la source de chaleur (10) de façon à chauffer l'air soufflé, dans lequel le réchauffeur (210) est agencé dans le circuit de réchauffeur (30), et
une unité de pompage (122) disposée dans le circuit de circulation de milieu thermique (20) pour faire circuler le milieu thermique.

2. Système de récupération de chaleur perdue de la source de chaleur selon la revendication 1, **caractérisé en ce que** comprenant en outre :
une unité de commutation (26, 126) disposée dans le circuit de circulation de milieu thermique (20) pour ajuster une distribution de flux entre une quantité de flux de milieu thermique destiné à être introduit dans le réchauffeur (210) et une quantité de flux de milieu thermique passant à travers l'échangeur thermique de refroidissement (21),
dans lequel au moins l'une d'une capacité de décharge de l'unité de pompage (122) et de la distribution de flux distribuée par l'unité de commutation (26, 126) est variable.

3. Système de récupération de chaleur perdue de la source de chaleur selon la revendication 2, **caractérisé en ce que** comprenant en outre une unité de commande (600) pour commander au moins l'une de l'unité de pompage (26, 126) et de l'unité de commutation (26, 126).

4. Système de récupération de chaleur perdue de la source de chaleur selon la revendication 3, **caractérisé en ce que** l'unité de commande (600) commande au moins l'une de l'unité de pompage (26, 126) et de l'unité de commutation (26, 126) sur la base de la température du milieu thermique déchargé de la source de chaleur (10) dans le circuit de circulation de milieu thermique (20).

5. Système de récupération de chaleur perdue de la source de chaleur selon la revendication 4, **caractérisé en ce que** :
l'unité de commande (600) calcule une différence entre une température cible (Tt) du milieu thermique et une température réelle (Tw) du milieu thermique déchargé de la source de chaleur (10) ;
lorsque la différence est inférieure à un premier seuil (-t), l'unité de commande (600) détermine qu'une température de la source de chaleur (10) est excessivement basse, et commande l'unité de commutation (26, 126) de façon à diminuer une quantité de distribution de milieu thermique pénétrant dans l'échangeur thermique de refroidissement (21) lorsque la quantité de distribution n'est pas substantiellement zéro ; et
lorsque la différence est supérieure à un deuxième seuil (+t), qui est supérieur au premier seuil, l'unité de commande (600) détermine que la température de la source de chaleur (10) est excessivement élevée, et commande l'unité de pompage (26, 126) de façon à augmenter la capacité de décharge lorsque l'unité de pompage (26, 126) a une capacité de décharge additionnelle.

6. Système de récupération de chaleur perdue de la source de chaleur selon la revendication 4, **caractérisé en ce que** :
l'unité de commande (600) calcule une différence entre une température cible (Tt) du milieu thermique et une température réelle (Tw) du milieu thermique déchargé de la source de chaleur (10) ;
lorsque la différence est inférieure à un premier seuil (-t), l'unité de commande (600) détermine qu'une température de la source de chaleur (10) est excessivement basse, et commande l'unité de pompage (26, 126) de façon à diminuer la capacité de décharge de l'unité de pompage (26, 126) ; et
lorsque la différence est supérieure à un deuxième seuil (+t), qui est plus grand que le premier seuil (-t), l'unité de commande (600) détermine que la température de la source de chaleur (10) est excessivement élevée, et commande l'unité de pompage (26, 126) de façon à augmenter la capacité de décharge.

7. Système de récupération de chaleur perdue de la source de chaleur selon la revendication 4, **caractérisé en ce que** :
l'unité de commande (600) calcule une différence entre une température cible (Tt) du milieu thermique et une température réelle (Tw) du milieu thermique déchargé de la source de chaleur (10) ;
lorsque la différence est inférieure à un premier seuil (-t), l'unité de commande (600) détermine qu'une température de la source de chaleur (10) est excessivement basse, et commande l'unité de commutation (26, 126) de façon à diminuer une quantité de distribution de milieu thermique distribué par l'unité de commutation (26, 126) dans l'échangeur thermique de refroidissement (21) ; et
lorsque la différence est supérieure à un deuxième seuil (+t), qui est supérieur au premier seuil, l'unité de commande (600) détermine que la température de la source de chaleur (10) est excessivement élevée, et commande l'unité de commutation (26, 126) de façon à augmenter la quantité de distribution.

8. Système de récupération de chaleur perdue de la source de chaleur selon la revendication 1, **caractérisé en ce que** :
le circuit de réchauffeur (30) inclut en outre une deuxième unité de pompage (222) en plus de l'unité de pompage (22, 122, 126) pour faire circuler le milieu thermique ; et
la deuxième unité de pompage (222) a une capacité de décharge variable.

9. Système de récupération de chaleur perdue de la source de chaleur selon la revendication 8, **caractérisé en ce que** :
la source de chaleur (10) est un dispositif rotatif (10) ; et
la deuxième unité de pompage (222) est commandée sur la base d'une vitesse de rotation du dispositif rotatif (10) .

10. Système de récupération de chaleur perdue de la source de chaleur selon l'une quelconque des revendications 1 à 9, **caractérisé en ce que** comprenant en outre une deuxième unité de commutation (28, 128) pour ouvrir et fermer un passage de flux de milieu thermique pénétrant dans le réchauffeur, dans lequel la deuxième unité de commutation (28, 128) est située sur un d'un côté d'entrée du réchauffeur (210) et d'un côté de sortie du réchauffeur (210).

11. Système de récupération de chaleur perdue de la source de chaleur selon la revendication 10, **caractérisé en ce que** la deuxième unité de commutation (28, 128) est prévue pour changer une quantité de flux pénétrant dans le réchauffeur.

12. Système de récupération de chaleur perdue de la source de chaleur selon la revendication 11, **caractérisé en ce que** comprenant en outre un moyen de commande de fermeture à force (étapes S801, S1202, S1203, S1205) qui commande à force la deuxième unité de commutation (28, 128) lorsqu'une température du milieu thermique est égale ou supérieure à une température prédéterminée.

13. Système de récupération de chaleur perdue de la source de chaleur selon l'une quelconque des revendications 1 à 12, comprenant en outre :
un dispositif d'entraînement (520, 530, 510, 410) qui est disposé de manière à obtenir une énergie motrice générée dans la source de chaleur (10) ; et
un cycle de réfrigérant (300) qui inclut un compresseur (310) entraîné par le dispositif d'entraînement (520, 530, 510, 410) pour compresser et faire circuler le réfrigérant,
**caractérisé en ce que** :
le dispositif de détente (220) est mécaniquement couplé avec le compresseur (310) ; et
le dispositif de détente (220) est disposé de manière à ajouter l'énergie motrice générée dans le dispositif de détente au compresseur (310), lorsque l'énergie motrice est générée dans le dispositif de détente (220).

14. Système de récupération de chaleur perdue de la source de chaleur selon la revendication 1, comprenant en outre une deuxième unité de pompage (222) pour faire circuler le milieu thermique de manière à augmenter la quantité de flux d'eau de refroidissement pénétrant dans le réchauffeur (210), dans lequel la deuxième unité de pompage a une capacité de décharge variable.

15. Système de récupération de chaleur perdue de la source de chaleur selon la revendication 14, dans lequel :
la source de chaleur (10) est un dispositif rotatif ; et
la deuxième unité de pompage (222) est commandée sur la base d'une vitesse de rotation du dispositif rotatif (10).

16. Système de récupération de chaleur perdue de la source de chaleur selon la revendication 14, dans lequel :
la source de chaleur (10) est un moteur (10) ;
l'unité de pompe (22, 122, 126) est un dispositif de type mécanique entraîné par le moteur (10), et
la deuxième unité de pompage (222) est un dispositif à entraînement électrique de sorte que la deuxième unité de pompage (222) peut augmenter de façon secondaire la quantité de flux d'eau de refroidissement pénétrant dans le réchauffeur (210) même si la quantité de flux d'eau de refroidissement traversant le circuit d'eau de refroidissement (20) est relativement faible du fait de la faible vitesse de rotation du moteur (10).
